# EUROPEAN PATENT SPECIFICATION

(11) **EP 3 230 365 B1**
(45) Date of publication and mention of the grant of the patent: **24.02.2021**
(21) Application number: 15804743.1
(22) Date of filing: 02.12.2015
(51) Int. Cl.: C08L 23/08, C08F 4/656, C08F 4/659, C08F 210/16

(54) **POLYETHYLENE COMPOSITION COMPRISING TWO TYPES OF LINEAR LOW DENSITY POLYETHYLENE**
POLYETHYLENZUSAMMENSETZUNG MIT ZWEI ARTEN VON LINEAREM POLYETHYLEN MIT NIEDRIGER DICHTE
COMPOSITION DE POLYÉTHYLÈNE COMPRENANT DEUX TYPES DE POLYÉTHYLÈNE LINÉAIRE DE FAIBLE DENSITÉ

(30) Priority: 12.12.2014 EP 14197558; 02.01.2015 US 201562099300 P
(43) Date of publication of application: 18.10.2017
(73) Proprietor: SABIC Global Technologies B.V., 4612 PX Bergen op Zoom (NL)
(72) Inventor: HABIBI, Salaheldin , M A., Saudi Arabia 11422 (SA); FELLAHI, Said, Riyadh RIYADH 11422 (SA); MOMAN, Akhlaq, Saudi Arabia 11422 (SA); BANAT, Yahya, 6160 GA Geleen Limburg (NL); AL-HUMYDI, Abdulaziz Hamad, RIYADH 11422 (SA)
(74) Representative: Sabic Intellectual Property Group
(86) International application number: PCT/EP2015/078353
(87) International publication number: WO 2016/091679

(56) References cited:
- EP-A1- 2 610 269
- WO-A1-2012/069157

## Description

The invention is directed to a polyethylene composition , to the use of the polyethylene composition for the preparation of articles, like for example blown films, and to articles comprising this polyethylene composition.

Polyethylene compositions are known in the art. In general, these compositions can be prepared with Ziegler-Natta catalysts, with metallocene catalysts and in high pressure polymerization plants. Usually, the compositions prepared in plants using Ziegler-Natta or metallocene catalysts are linear products having narrow to broad molecular weight distributions, while in high pressure plants branched polyethylenes, so called low density polyethylene (LDPE), is produced.

Each composition has advantages and disadvantages and the skilled man chooses a certain polyethylene composition depending on the application that he has in mind and the polymer properties that are needed for this application. Polyethylene compositions produced in the presence of a Ziegler-Natta catalyst are known. These polyethylene compositions and the process for producing these polyethylene compositions are for example described by T. Pullukat and R. Hoff in Catal. Rev. - Sci. Eng. 41, vol. 3 and 4, 389-438, 1999. A property of polyethylene compositions produced in the presence of a Ziegler-Natta catalyst is that the die swell of these polyethylene compositions is relatively high. This high die swell may be favorable for bubble stability and processability.

Polyethylene compositions produced in the presence of a metallocene catalyst are known. These polyethylene compositions and the process for producing these polyethylene compositions are for example described in WO 2013/097936. A disadvantage of polyethylene compositions produced in the presence of a metallocene catalyst is that the torque of these polyethylene compositions is high which makes processability of these polyethylene compositions in an extruder difficult or impossible. Further the elasticity of these polyethylene compositions is low, which causes problems during the production of blown films. An expensive polymer processing aid (PPA) is often used to make extrusion of polymer compositions produced in the presence of a metallocene catalyst possible.
In general, blending of different types of polyethylene is not straightforward. In most cases inhomogeneous blends are obtained which results in inferior properties of the blends. The properties of the blend that are anticipated by the man skilled in the art cannot be obtained. In order to compensate for the heterogeneity of the blend many times a third component is added; for example an LDPE. The resulting blend has unpredictable properties and a balance of properties can only be obtained by trial and error. It is an object of the invention to obtain a polyethylene composition which has good optical and mechanical properties, a low die swell and excellent processability.

This object can be achieved by a polyethylene composition comprising wt% of a LLDPE A and 55-12 Z wt% of a LLDPE B, wherein
i) LLDPE A is obtainable by a process for producing a copolymer of ethylene and another α-olefin in the presence of an Advanced Ziegler-Natta catalyst (AZN), wherein the Ziegler-Natta catalyst is produced in a process comprising the steps of:
   a) contacting a dehydrated solid support having hydroxyl groups with a magnesium compound having the general formula MgR'R", wherein R' and R" are the same or different and are independently selected from the group comprising an alkyl group, alkenyl group, alkadienyl group, aryl group, alkaryl group, alkenylaryl group and alkadienylaryl group;
   b) contacting the product obtained in step (a)
      with modifying compounds (A), (B) and (C), wherein:
      compound (A) is at least one compound selected from the group consisting of carboxylic acid, carboxylic acid ester, ketone, acyl halide, aldehyde and alcohol;
      compound (B) is a compound having the general formula R¹ₐ(R²O)_{b}SiY¹_{c}, wherein a, b and c are each integers from 0 to 4 and the sum of a, b and c is equal to 4 with a proviso that when c is equal to 4 then modifying compound (A) is not an alcohol, Si is a silicon atom, O is an oxygen atom, Y¹ is a halide atom and R¹ and R² are the same or different and are independently selected from the group comprising an alkyl group, alkenyl group, alkadienyl group, aryl group, alkaryl group, alkenylaryl group and alkadienylaryl group;
      compound (C) is a compound having the general formula (R¹¹O)₄M¹ wherein M¹ is a titanium atom, a zirconium atom or a vanadium atom, O is an oxygen atom and R¹¹ is selected from the group comprising an alkyl group, alkenyl group, alkadienyl group, aryl group, alkaryl group, alkenylaryl group and alkadienylaryl group; and
   c) contacting the product obtained in step (b) with a titanium halide compound having the general formula TiY₄, wherein Ti is a titanium atom and Y is a halide atom,
ii) LLDPE B is obtained by a process for producing a copolymer of ethylene and another α-olefin in the presence of a metallocene catalyst.

An advantage of the polyethylene composition according to the invention is that it is a homogeneous polyethylene composition. This homogeneous composition can be obtained in the absence of any substantial amount of polymer processing aid or a compatibilizing component in the polyethylene composition according to the invention.

A further advantage is that the die swell of the polyethylene composition is low even when only a small amount of a LLDPE B produced in the presence of a metallocene catalyst is added to a LLDPE A produced in the presence of an AZN catalyst.

Other advantages of the polyethylene composition according to the invention is that the crystallinity of the polyethylene composition is high and the optical properties are excellent.

Further the processability of the polyethylene composition in an extruder is good, because both the melt pressure and the torque of the polyethylene composition are relatively low.

LLDPE A is also described herein as AZ LLDPE and LLDPE B is also described herein as mLLDPE.

The polyethylene composition according to the invention consists essentially of LLDPE A and LLDPE B. Apart from LLDPE A and LLDPE B additives can be present in the polyethylene composition. The amount of additives is usually low, preferably the amount of additives in the polyethylene composition is below 10 wt% based on the total weight of the polyethylene composition, more preferably below 5 wt%.

There is preferably no, or only a limited amount of polymer processing aid (PPA) present in the polyethylene composition. A polymer processing aid is a polymeric compound which migrates to and coats the wall of the extruder die during processing. Examples of PPA's are copolymers of hexafluoropropylene and vinylidene fluoride (Dynamar ® PPA - FX9613), a terpolymer of hexafluoropropylene, vinylidene fluoride and tetrafluoroethylene (Dynamar ® PPA - FX5911) and a PPA blend (Dynamar ® PPA-FX5920A). the amount of PPA is preferably below 1 wt%, more preferably below 0.1 wt%, relative to the total of the composition.

There is also preferably no, or only a limited amount of compatibilizing component present in the polymer composition. A compatibilizing component is a component that is compatible with, in this case, LLDPE A and LLDPE B and improves mixing of LLDPE A and LLDPE B. An example of a compatibilizing component is LDPE. The amount of compatibilizer is preferably below 1 wt%, more preferably below 0.2 wt%, relative to the total of the composition.

The polyethylene composition according to the invention comprises 45-88 wt% of LLDPE A and 55-12 wt% of LLDPE B or 50-88 wt% of LLDPE A and 50-12 wt% of LLDPE B, more preferably 60-85 wt% of LLDPE A and 40-15 wt% of LLDPE B.

Already with a low amount of LLDPE B present in the polyethylene composition the die swell of the polyethylene composition is low.

The processability of the polyethylene composition improves when the amount of LLDPE A in the polyethylene composition is raised. A polyethylene composition comprising more than 45 wt% of LLDPE A has a remarkably good processability because both the melt pressure and the torque of these polyethylene compositions are relatively low.

The % crystallinity of the polyethylene compositions according to the invention becomes lower when the wt% of LLDPE B in the polyethylene composition rises. There is an optimum in the % crystallinity when the wt% LLDPE B in the polyethylene composition is between 15 and 40 wt.%.

As the % crystallinity increases, the density increases, thus, higher crystalline melting point. As the % crystallinity increases the mechanical/tensile properties increases and the resin becomes stiffer. The lower the % crystallinity, the better the optical properties.

### LLDPE A

The polyethylene composition according to the invention comprises LLDPE A. LLDPE A is obtainable by a process for producing an ethylene and another α-olefin in the presence of an Advanced Ziegler-Natta catalyst.

### Process for producing an AZN catalyst

The Advanced Ziegler-Natta catalyst is produced in a process comprising a first step (a) of contacting a dehydrated solid support having hydroxyl (OH) groups with a magnesium compound to form a solid magnesium containing support material.

The solid support is any material containing hydroxyl groups. Suitable examples of such materials include inorganic oxides, such as silica, alumina, magnesia, thoria, zirconia and mixtures of such oxides. Preferably, porous silica is used as the support as higher bulk densities and higher catalyst productivities are obtained therewith. Silica may be in the form of particles having a mean particle diameter of 1 micron to 500 microns, preferably from 5 microns to 150 microns and most preferably from 10 microns to 100 microns. Silica with a lower mean particle diameter produces a higher level of polymer fines and silica with a higher mean particle diameter reduces polymer bulk density. The silica may have a surface area of 5 m²/g to 1500 m²/g, preferably from 50 m²/g to 1000 m²/g and a pore volume of from 0.1 cm³/g to 10.0 cm³/g, preferably from 0.3 cm³/g to 3.5 cm³/g, as higher catalyst productivity is obtained in this range.

The dehydrated solid support can be obtained by drying the solid support in order to remove physically bound water and to reduce the content of hydroxyl groups to a level which may be of from 0.1 mmol to 5.0 mmol hydroxyl groups per gram of support, preferably from 0.2 mmol to 2.0 mmol hydroxyl groups per gram of support, as this range allows sufficient incorporation of the active catalyst components to the support, determined by the method as described in J.J. Fripiat and J. Uytterhoeven, J. Phys. Chem. 66, 800, 1962 or by applying ¹H NMR spectroscopy. The hydroxyl groups content in this range may be achieved by heating and fluidizing the support at a temperature of from 150°C to 900°C for a time of 1 hour to 15 hours under a nitrogen or air flow. The dehydrated support can be slurried, preferably by stirring, in a suitable hydrocarbon solvent in which the individual catalyst components are at least partially soluble. Examples of suitable hydrocarbon solvents include n-pentane, isopentane, cyclopentane, n-hexane, isohexane, cyclohexane, n-heptane, isoheptane, n-octane, isooctane and n-decane. The amount of solvent used is not critical, though the solvent should be used in an amount to provide good mixing of the catalyst components.

The magnesium compound is represented by the general formula MgR'R", wherein R' and R" are the same or different and are independently selected from a group comprising an alkyl group, alkenyl group, alkadienyl group, aryl group, alkaryl group, alkenylaryl group and an alkadienylaryl group and may have from 1 to 20 carbon atoms. Suitable examples of the magnesium compound include dimethylmagnesium, diethylmagnesium, ethylmethylmagnesium, di-n-propylmagnesium, diisopropylmagnesium, n-propylethylmagnesium, isopropylethylmagnesium, di-n-butylmagnesium, diisobutylmagnesium, n-butylethylmagnesium, n-butyl-n-propylmagnesium, n-butylisopropylmagnesium, isobutylethylmagnesium, isobutyl-n-propylmagnesium, isobutylisopropylmagnesium, di-n-pentylmagnesium, diisopentylmagnesium, n-pentylethylmagnesium, n-pentyl-n-propylmagnesium, n-pentylisopropylmagnesium, n-pentyl-n-butylmagnesium, n-pentylisobutylmagnesium, di-n-hexylmagnesium, diisohexylmagnesium, n-hexylethylmagnesium, n-hexyl-n-propylmagnesium, n-hexylisopropyl magnesium, n-hexyl-n-butylmagnesium, n-hexylisobutylmagnesium, isohexylethylmagnesium, isohexyl-n-propylmagnesium, isohexylisopropyl magnesium, isohexyl-n-butylmagnesium, isohexylisobutylmagnesium, di-n-octylmagnesium, diisooctylmagnesium, n-octylethylmagnesium, n-octyl-n-propylmagnesium, n-octylisopropylmagnesium, n-octyl-n-butylmagnesium, n-octylisobutyl magnesium, isooctylethylmagnesium, isooctyl-n-propylmagnesium, isooctylisopropylmagnesium, isooctyl-n-butylmagnesium, isooctylisobutyl magnesium, dicyclopentylmagnesium, cyclopentylethylmagnesium, cyclopentyl-n-propylmagnesium, cyclopentylisopropylmagnesium, cyclopentyl-n-butylmagnesium, cyclopentylisobutylmagnesium, dicyclohexylmagnesium, cyclohexylethylmagnesium, cyclohexyl-n-propylmagnesium, cyclohexylisopropyl magnesium, cyclohexyl-n-butylmagnesium, cyclohexylisobutylmagnesium, diphenylmagnesium, phenylethylmagnesium, phenyl-n-propylmagnesium, phenyl-n-butylmagnesium and mixtures thereof.

Preferably, the magnesium compound is selected from the group comprising di-n-butylmagnesium, n-butylethylmagnesium and n-octyl-n-butylmagnesium.

The magnesium compound can be used in an amount ranging from 0.01 to 10.0 mmol per gram of solid support, preferably from 0.1 to 3.5 mmol per gram of support and more preferably from 0.3 to 2.5 mmol per gram of support as by applying this range the level of polymer fines of the product is reduced and higher catalyst productivity is obtained. The magnesium compound may be reacted, preferably by stirring, with the support at a temperature of 15°C to 140°C during 5 minutes to 150 minutes, preferably at a temperature of 20°C to 80°C for a duration of 10 minutes to 100 minutes.

The molar ratio of Mg to OH groups in the solid support can be in the range of 0.01 to 10.0, preferably of from 0.1 to 5.0 and more preferably of from 0.1 to 3.5, as the level of polymer fines of the product is reduced and higher catalyst productivity is obtained.

The modifying compound (A) is at least one compound selected from the group consisting of carboxylic acids, carboxylic acid esters, ketones, acyl halides, aldehydes and alcohols. The modifying compound (A) may be represented by the general formula R³COOH, R⁴COOR⁵, R⁶COR⁷, R⁸COY², R⁹COH or R¹⁰OH, wherein Y² is a halide atom and R³, R⁴, R⁵, R⁶, R⁷, R⁸, R⁹ and R¹⁰ are independently selected from a group of compounds comprising an alkyl group, alkenyl group, alkadienyl group, aryl group, alkaryl group, alkenylaryl group and an alkadienylaryl group and may have from 1 to 20 carbon atoms.

Suitable examples of the carboxylic acids include acetic acid, propionic acid, isopropionic acid, butyric acid, isobutyric acid, valeric acid, isovaleric acid, caproic acid, isocaproic acid, enanthic acid, isoenanthic acid, caprylic acid, isocaprylic acid, pelargonic acid, isopelargonic acid, capric acid, isocapric acid, cyclopentanecarboxylic acid, benzoic acid and mixtures thereof.

Suitable examples of carboxylic acid esters include methyl acetate, ethyl acetate, n-propyl acetate, isopropyl acetate, n-butyl acetate, isobutyl acetate, isoamyl acetate, ethyl butyrate, n-butyl butyrate and/or isobutyl butyrate.

Suitable examples of ketones include dimethyl ketone, diethyl ketone, methyl ethyl ketone, di-n-propyl ketone, di-n-butyl ketone, methyl n-propyl ketone, methyl isobutyl ketone, cyclohexanone, methyl phenyl ketone, ethyl phenyl ketone, n-propyl phenyl ketone, n-butyl phenyl ketone, isobutyl phenyl ketone, diphenyl ketone and mixtures thereof.

Suitable examples of acyl halides include ethanoyl chloride, propanoyl chloride, isopropanoyl chloride, n-butanoyl chloride, isobutanoyl chloride, benzoyl chloride and mixtures thereof.

Suitable examples of aldehydes include acetaldehyde, propionaldehyde, n-butyraldehyde, isobutyraldehyde, n-pentanaldehyde, isopentanaldehyde, n-hexanaldehyde, isohexanaldehyde, n-heptanaldehyde, benzaldehyde and mixtures thereof.

Suitable examples of alcohols include methanol, ethanol, n-propanol, isopropanol, n-butanol, isobutanol, sec-butanol, tert-butanol, cyclobutanol, n-pentanol, isopentanol, cyclopentanol, n-hexanol, isohexanol, cyclohexanol, n-octanol, isooctanol, 2-ethylhexanol, phenol, cresol, ethylene glycol, propylene glycol and mixtures thereof.

Preferably, the modifying compound (A) is at least one compound selected from the group comprising methyl n-propyl ketone, ethyl acetate, n-butyl acetate, acetic acid, isobutyric acid, isobutyraldehyde, ethanoyl chloride, ethanol and sec-butanol, and more preferably from methyl n-propyl ketone, n-butyl acetate, isobutyric acid and ethanoyl chloride as higher catalyst productivity and higher bulk density of the products are obtained and these compounds can be used to vary molecular weight distribution of the product.

The molar ratio of modifying compound (A) to magnesium in the solid support can be in a range of from 0.01 to 10.0, preferably of from 0.1 to 5.0, more preferably of from 0.1 to 3.5 and most preferably of from 0.3 to 2.5, as higher catalyst productivity and higher bulk density of the products are obtained. The modifying compound (A) may be added to the reaction product obtained in step (a), preferably by stirring, at a temperature of 15°C to 140°C for a duration of 5 minutes to 150 minutes, preferably at a temperature of 20°C to 80°C for a duration of 10 minutes to 100 minutes.

The modifying compound (B) is a silicon compound represented by the general formula R¹ₐ(R²O)_{b}SiY¹_{c}, wherein a, b and c are each integers from 0 to 4 and the sum of a, b and c is equal to 4 with a proviso that when c is equal to 4 then modifying compound (A) is not an alcohol, Si is a silicon atom, O is an oxygen atom, Y¹ is a halide atom and R¹ and R² are the same or different. R¹ and R² are independently selected from the group of compounds comprising an alkyl group, alkenyl group, alkadienyl group, aryl group, alkaryl group, alkenylaryl group and an alkadienylaryl group. R¹ and R² may have from 1 to 20 carbon atoms.

Suitable silicon compounds include tetramethoxysilane, tetraethoxysilane, tetra-n-propoxysilane, tetraisopropoxysilane, tetra-n-butoxysilane, tetraisobutoxysilane, methyltrimethoxysilane, ethyltrimethoxysilane, n-propyltrimethoxysilane, isopropyltrimethoxysilane, n-butyltrimethoxysilane, isobutyltrimethoxysilane, n-pentyltrimethoxysilane, n-hexyltrimethoxysilane, n-octyltrimethoxysilane, isooctyltrimethoxysilane, vinyltrimethoxysilane, phenyltrimethoxysilane, dimethyldimethoxysilane, diethyldimethoxysilane, isobutylmethyldimethoxysilane, diisopropyldimethoxysilane, diisobutyldimethoxysilane, diisobutyldimethoxysilane, isobutylisopropyldimethoxysilane, dicyclopentyldimethoxysilane, cyclohexylmethyldimethoxysilane, phenylmethyldimethoxysilane, diphenyldimethoxysilane, trimethylmethoxysilane, triethylmethoxysilane, methyltriethoxysilane, ethyltriethoxysilane, n-propyltriethoxysilane, isopropyltriethoxysilane, n-butyltriethoxysilane, isobutyltriethoxysilane, n-pentyltriethoxysilane, n-hexyltriethoxysilane, n-octyltriethoxysilane, isooctyltriethoxysilane, vinyltriethoxysilane, phenyltriethoxysilane, dimethyldiethoxysilane, diethyldiethoxysilane, isobutylmethyldiethoxysilane, diisopropyldiethoxysilane, diisobutyldiethoxysilane, isobutylisopropyldiethoxy silane, dicyclopentyldiethoxysilane, cyclohexylmethyldiethoxysilane, phenylmethyldiethoxysilane, diphenyldiethoxysilane, trimethylethoxysilane, triethylethoxysilane, silicon tetrachloride, methyltrichlorosilane, ethyltrichlorosilane, n-propyltrichlorosilane, isopropyltrichlorosilane, n-butyltrichlorosilane, isobutyltrichlorosilane, n-pentyltrichlorosilane, n-hexyltrichlorosilane, n-octyltrichlorosilane, isooctyltrichlorosilane, vinyl Itrichlorosilane, phenyltrichlorosilane, dimethyldichlorosilane, diethyl dichlorosilane, isobutylmethyldichlorosilane, diisopropyldichlorosilane, diisobutyldichlorosilane, isobutylisopropyldichlorosilane, dicyclopentyldichloro silane, cyclohexylmethyldichlorosilane, phenylmethyldichlorosilane, diphenyldichlorosilane, trimethylchlorosilane, triethylchlorosilane, chloro trimethoxysilane, dichlorodimethoxysilane, trichloromethoxysilane, chloro triethoxysilane, dichlorodiethoxysilane and/or trichloroethoxysilane. Preferably, the modifying compound (B) used is tetraethoxysilane, n-propyltriethoxysilane, isobutyltrimethoxysilane, dimethyldichlorosilane, n-butyltrichlorosilane and silicon tetrachloride, and more preferably isobutyltrimethoxysilane, tetraethoxysilane, n-propyltriethoxysilane, n-butyltrichlorosilane and silicon tetrachloride as higher catalyst productivity and higher bulk density are obtained with the ability to vary the molecular weight distribution of the product by employing these preferred compounds.

The molar ratio of modifying compound (B) to magnesium may be in a range of from 0.01 to 5.0, preferably from 0.01 to 3.0, more preferably from 0.01 to1.0 and most preferably from 0.01 to 0.3, as higher catalyst productivity and higher bulk density are obtained. The modifying compound (B) may be added to the reaction product obtained in step (a), preferably by stirring, at a temperature of 15°C to 140°C during 5 minutes to 150 minutes, preferably at a temperature of 20°C to 80° C during 10 minutes to 100 minutes.

The modifying compound (C) is a transition metal alkoxide represented by the general formula (R¹¹O)₄M¹ wherein M¹ is a titanium atom, a zirconium atom or a vanadium atom, O is an oxygen atom and R¹¹ is a compound selected from the group of compounds comprising an alkyl group, alkenyl group, alkadienyl group, aryl group, alkaryl group, alkenylaryl group and an alkadienylaryl group. R¹¹ may have from 1 to 20 carbon atoms.

Suitable transition metal alkoxide compounds include titanium tetramethoxide, titanium tetraethoxide, titanium tetra-n-propoxide, titanium tetraisopropoxide, titanium tetra-n-butoxide, titanium tetraisobutoxide, titanium tetra-n-pentoxide, titanium tetraisopentoxide, titanium tetra-n-hexoxide, titanium tetra-n-heptoxide, titanium tetra-n-octoxide, titanium tetracyclohexoxide, titanium tetrabenzoxide, titanium tetraphenoxide, zirconium tetramethoxide, zirconium tetraethoxide, zirconium tetra-n-propoxide, zirconium tetraisopropoxide, zirconium tetra-n-butoxide, zirconium tetraisobutoxide, zirconium tetra-n-pentoxide, zirconium tetraisopentoxide, zirconium tetra-n-hexoxide, zirconium tetra-n-heptoxide, zirconium tetra-n-octoxide, zirconium tetracyclohexoxide, zirconium tetrabenzoxide, zirconium tetraphenoxide, vanadium tetramethoxide, vanadium tetraethoxide, vanadium tetra-n-propoxide, vanadium tetraisopropoxide, vanadium tetra-n-butoxide, vanadium tetraisobutoxide, vanadium tetra-n-pentoxide, vanadium tetraisopentoxide, vanadium tetra-n-hexoxide, vanadium tetra-n-heptoxide, vanadium tetra-n-octoxide, vanadium tetracyclohexoxide, vanadium tetrabenzoxide, vanadium tetraphenoxide or mixtures thereof. Preferably, titanium tetraethoxide, titanium tetra-n-butoxide and zirconium tetra-n-butoxide are used because higher catalyst productivity and higher bulk density are obtained with the ability to vary the molecular weight distribution of the product by employing these preferred compounds.

The molar ratio of the modifying compound (C) to magnesium may be in the range of from 0.01 to 5.0, preferably from 0.01 to 3.0, more preferably from 0.01 to 1.0 and most preferably from 0.01 to 0.3, as higher catalyst productivity, higher bulk density and improved hydrogen response in polymerization are obtained. The modifying compound (C) may be reacted, preferably by stirring, with the product obtained in step (a) at a temperature of 15°C to 140°C for a duration of 5 minutes to 150 minutes, preferably at a temperature of 20°C to 80°C for a duration of 10 minutes to 100 minutes.

The modifying compounds (A), (B) and (C) can be contacted in any order or simultaneously with the solid magnesium containing support obtained in step (a). Preferably, (A) is added first to the reaction product obtained in step (a) and then (B), followed by the addition of (C) as higher catalyst productivity and higher product bulk density are obtained by employing this order of adding the modifying compounds. Premixtures of the individual catalyst components can also be effectively utilized.

Preferably, when modifying compound (A) is methyl n-propyl ketone and modifying compound (C) is titanium tetraethoxide, a further increase of molecular weight distribution is obtained when modifying compound (B) is selected in the following order from the group consisting of isobutyltrimethoxysilane, n-propyltriethoxysilane, tetraethoxysilane, n-butyltrichlorosilane and silicon tetrachloride, at the same levels of titanium halide compound.

In the preferred case when the modifying compound (B) is silicon tetrachloride and modifying compound (C) is titanium tetraethoxide, a further improved combination of catalyst productivity and bulk density is obtained when modifying compound (A) is selected in the following order from the group consisting of isobutyraldehyde, ethyl acetate, n-butyl acetate, methyl n-propyl ketone and isobutyric acid, at the same levels of titanium halide compound.

The titanium halide compound is represented by the general formula TiY₄, wherein Ti is a titanium atom and Y is a halide atom.

Suitable titanium halide compounds include titanium tetrachloride, titanium tetrabromide, titanium tetrafluoride or mixtures thereof. The preferred titanium halide compound is titanium tetrachloride, as higher catalyst productivity is obtained. The molar ratio of the titanium halide compound to magnesium may be in the range of 0.01 to 10.0, preferably from 0.01 to 5.0 and more preferably from 0.05 to 1.0, as a better balance of high catalyst productivity and high bulk density is obtained.

The titanium halide compound may be added to the reaction mixture obtained by applying step (a) and step (b) in any conventional manner, such as by stirring, at a temperature of 15°C to 140°C for a duration of 5 mi nutes to 150 minutes, preferably at a temperature of 20°C to 80°C for a duration of 10 mi nutes to 100 minutes. The reaction mixture may be then dried using a nitrogen purge and/or by vacuum at a temperature from 15°C to 140°C, preferably 30°C to 100°C and most pr eferably 50°C to 80°C to yield the Advanced Ziegler-Natta catalyst component.

The total molar ratio of the modifying compound (C) and the titanium halide compound to magnesium may be in the range of from 0.01 to 10.0, preferably of from 0.01 to 5.0 and more preferably of from 0.05 to 1.0, as a better balance of high catalyst productivity and high bulk density is obtained.

The total molar ratio of the modifying compound (C) and the titanium halide compound to hydroxyl (OH) groups in the support after dehydration may be in the range of from 0.01 to 10.0, preferably of from 0.01 to 5.0 and more preferably of from 0.05 to 1.0, as a better balance of high catalyst productivity and high bulk density is obtained. Higher levels would produce high catalyst productivity though with reduced bulk density, especially in a gas phase polymerization processes. Further, applying these amounts eliminates the requirement to conduct solvent decanting, solvent filtering, solvent washing steps in catalyst preparation and hence eliminates generation of highly hazardous solvent waste material.

In one embodiment the Advanced Ziegler-Natta catalyst system can comprise a catalyst component and a co-catalyst. The co-catalyst is typically an organometallic compound such as aluminum alkyls, aluminum alkyl hydrides, lithium aluminum alkyls, zinc alkyls, calcium alkyls, magnesium alkyls or mixtures thereof. Preferred co-catalysts are represented by the general formula R¹²ₙAlY³₃₋ₙ, wherein Y³ represents a halide atom; n represents an integer from 0 to 3; and R¹² is selected from a group of compounds comprising an alkyl group, alkenyl group, alkadienyl group, aryl group, alkaryl group, alkenylaryl group and alkadienylaryl group. R¹² may have from 1 to 20 carbon atoms. Suitable examples of the cocatalyst include trimethylaluminum, triethylaluminum, tri-isobutylaluminum, tri-n-hexylaluminum, tri-n-octylaluminum, diethylaluminum chloride, diisobutylalumium chloride, ethylaluminium dichloride, isobutyl laluminum dichloride and mixtures thereof. Preferably, the cocatalyst is trimethylaluminum, triethylaluminum and/or tri-isobutylaluminum; and more preferably, the cocatalyst is triethylaluminum.

The cocatalyst may be used in a molar ratio of aluminum in the co-catalyst to titanium in the solid catalyst component of from 1 to 500, more preferably from 10 to 250, as high catalyst productivity is obtained.

### Process for producing LLDPE A

The Advanced Ziegler-Natta catalyst system can be applied in slurry, gas or solution phase conventional processes to obtain LLDPE A. These processes have already been described in the prior art and are thus well-known to the skilled person. Preferably, ethylene copolymers are produced by gas phase processes, such as stirred bed reactors and fluidized bed reactors or by slurry phase processes under polymerisation conditions already known in the art. Illustrative of gas phase processes are those disclosed for example in US 4302565 and US 4302566. A suitable example is a gas phase fluidized bed polymerization reactor fed by a dry or slurry catalyst feeder. The Advanced Ziegler-Natta catalyst may be introduced to the reactor in a site within the reaction zone to control the reactor production rate. The reactive gases, including ethylene and other alpha-olefins, hydrogen and nitrogen may be introduced to the reactor. The produced polymer may be discharged from the reaction zone through a discharge system. The bed of polymer particles in the reaction zone may be kept in fluidized state by a recycle stream that works as a fluidizing medium as well as to dissipate exothermal heat generated within the reaction zone. The reaction and compression heats can be removed from the recycle stream in an external heat exchange system in order to control the reactor temperature. Other means of heat removal from within the reactor can also be utilized, for example by the cooling resulting from vaporization of hydrocarbons such as isopentane, n-hexane or isohexane within the reactor. These hydrocarbons can be fed to the reactor as part of component reactant feeds and/or separately to the reactor to improve heat removal capacity from the reactor. The gas composition in the reactor can be kept constant to yield a polymer with the required specifications by feeding the reactive gases, hydrogen and nitrogen to make-up the composition of the recycle stream.

Suitable operating conditions for the gas phase fluidized bed reactor typically include temperatures in the range of 50°C to 115°C, more preferably from 70°C to 110°C, an ethylene partial pressure from 3 bar to 15 bar, more preferably from 5 bar to 10 bar and a total reactor pressure from 10 bar to 40 bar, more preferably from 15 bar to 30 bar. The superficial velocity of the gas, resulting from the flow rate of recycle stream within reactor may be from 0.2 m/s to 1.2 m/s, more preferably 0.2 m/s to 0.9 m/s.

By applying the process and the Advanced Ziegler-Natta catalyst system LLDPE A can be produced. Suitable examples of LLDPE A may include ethylene copolymers with an alpha-olefin or di-olefin co-monomers, having from 3 to 20 carbon atoms, such as propylene, 1-butene, 1-pentene, 1-hexene, 1-octene, 4-methyl-1-pentene, 1,3-butadiene, 1,4-pentadiene, 1,5-hexadiene and mixtures thereof. Preferably, 1-butene and 1-hexene are used as co-monomers. The amount of the comonomer needed depends generally on the desired product properties and specific comonomer used. The skilled person can easily select the required amount to obtain the desired product. In general, LLDPE A is provided containing 0.01 to 30 wt.% of one or more comonomers and from 70 to 99.99 wt.% of ethylene units.

A LLDPE A with a melt index (MI) in the range of 0.1 g/10 min to 150 g/10 min, preferably 0.3 g/10 min to 80 g/10 min (measured by ASTM D1238 at a temperature of 190°C and a load of 2.16 kg) can be obtained by using the Advanced Ziegler-Natta catalyst by varying the hydrogen to ethylene molar ratio; increasing the hydrogen to ethylene molar ratio generally leads to an increase in the melt index. Also, the melt index of the polymers can be varied by controlling the polymerization temperature and the density of the polymer obtained. A polymer density in the range of 850 kg/m³ to 935 kg/m³, more preferably 880 kg/m³ to 930 kg/m³ can be obtained by using the Advanced Ziegler-Natta catalyst and by varying the comonomer to ethylene molar ratio; for instance, increasing the comonomer to ethylene molar ratio typically leads to a reduction in density. Lower ratios of hydrogen to ethylene and lower ratios of comonomer to ethylene can be used to attain the target melt index and target polymer density, respectively, reducing the cost requirement of the utilisation of hydrogen and comonomer.

### LLDPE B

The polyethylene composition according to the invention comprises LLDPE B. LLDPE B is obtainable by a process for producing an ethylene and another α-olefin in the presence of a metallocene catalyst.

### Metallocene catalyst

A metallocene catalyst is a compound comprising two cyclopentadienyl-containing ligands bound to a metal center. The metallocene catalyst is a metallocene catalyst of the general formula I below 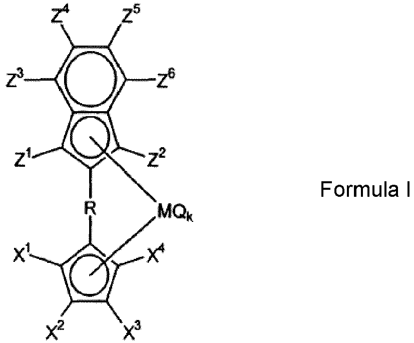 wherein:
M is a transition metal selected from the group consisting of lanthanides and metals from group 3, 4, 5 or 6 of the Periodic System of Elements; M is preferably selected from the group consisting of Ti, Zr and Hf with Zr being most preferred.
Q is an anionic ligand to M,
k represents the number of anionic ligands Q and equals the valence of M minus two divided by the valence of the anionic Q ligand
R is a hydrocarbon bridging group, such as alkyl. R preferably contains at least one sp2-hybridised carbon atom that is bonded to the indenyl group at the 2-position.
   Z and X are substituents.

In a preferred embodiment the metallocene catalyst is of the general formula II below 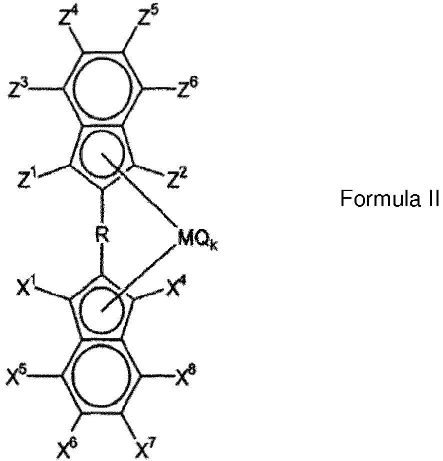 wherein:
M is a transition metal selected from the group consisting of lanthanides and metals from group 3, 4, 5 or 6 of the Periodic System of Elements; M is preferably selected from the group consisting of Ti, Zr and Hf with Zr being most preferred.
Q is an anionic ligand to M,
k represents the number of anionic ligands Q and equals the valence of M minus two divided by the valence of the anionic Q ligand
R is a hydrocarbon bridging group, such as alkyl. R preferably contains at least one sp2-hybridised carbon atom that is bonded to the indenyl group at the 2-position.
Z and X are substituents.

Bridging group R in the metallocene catalysts of general formula's I and II above preferably contains at least one aryl group. For example, the aryl group may be a monoaryl group such as phenylene or naphthalene or a biaryl group, such as biphenylidene or binaphthyl. Preferably the bridging group R stands for an aryl group, preferably R stands for a phenylene or biphenylidene group. The bridging group R is connected to the indenyl groups via a sp2 hybridised carbon atom, for example a phenylene group may be connected via the 1 and the 2 position, a biphenylene group may be connected via the 2 and 2'-position, a naphthalene group may be connected via the 2 and 3-position, a binapthyl group may be connected via the 2 and 2'-position. Preferably R stands for a phenylene group that is connected to the indenyl groups via the 1 and the 2 position. R may be 2,2'-biphenylene.

The substituents X in formulas I and II above may each separately be hydrogen or a hydrocarbon group with 1 - 20 carbon atoms (e.g. alkyl, aryl, aryl alkyl). Examples of alkyl groups are methyl, ethyl, propyl, butyl, hexyl and decyl. Examples of aryl groups are phenyl, mesityl, tolyl and cumenyl. Examples of aryl alkyl groups are benzyl, pentamethylbenzyl, xylyl, styryl and trityl. Examples of other substituents are halides, such as chloride, bromide, fluoride and iodide, methoxy, ethoxy and phenoxy. Also, two adjacent hydrocarbon radicals may be connected with each other in a ring system. X may also be a substituent which instead of or in addition to carbon and/or hydrogen may comprise one or more heteroatoms from group 14, 15 or 16 of the Periodic System of Elements. Examples of such a heteroatom containing substituents are alkylsulphides (like MeS-, PhS-, n-butyl-S-), amines (like Me2N-, n-butyl-N-), Si or B containing groups (like Me3Si- or Et2B-) or P-containing groups (like Me2P- or Ph2P-).

Preferably the X substituents are hydrogen.

The substituents Z in formulas I and II above may each separately be a substituent as defined above for substituent X. Z1 and Z2 substituents can together with the X1 and X4 substituents form a second bridge that connects the indenyl group with the cyclopentadienyl group in the indenyl compound.

Examples of metallocene catalysts are [ortho-bis(4-phenyl-2-indenyl)-benzene]zirconiumdichloride, [ortho-bis(5-phenyl-2-indenyl)-benzene]zirconiumdichloride, [ortho-bis(2-indenyl)benzene]zirconiumdichloride, [ortho-bis(2-indenyl)benzene]hafniumdichloride, [ortho-bis(1-methyl-2-indenyl)-benzene]zirconiumdichloride, [2.2'-(1.2-phenyldiyl)-1.1'-dimethylsilyl-bis(indene)]zirconiumdichloride, [2,2'-(1,2-phenyldiyl)-1,1'-diphenylsilyl-bis(indene)]zirconiumdichloride, [2,2'-(1.2-phenyldiyl)-1.1'-(1.2-ethanediyl)-bis(indene)]zirconiumdichloride, [2.2'-bis(2-indenyl)biphenyl]zirconiumdichloride and [2,2'-bis(2-indenyl)biphenyl]hafniumdichloride,

The metallocene catalyst component preferably contains zirconium as metal group M. The zirconium amount in the catalyst composition is preferably in the range of 0.02 - 1 wt%, preferably 0.15 - 0.30 wt% based on the catalyst composition.

The metallocene catalyst preferably comprises a support containing a metallocene catalyst component, a catalyst activator and a modifier.

More preferably, the modifier is the product of reacting an aluminum compound of general formula (1) 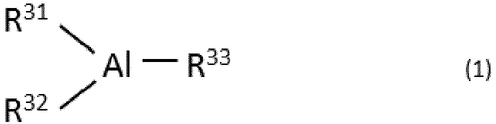 with an amine compound of general formula (2) 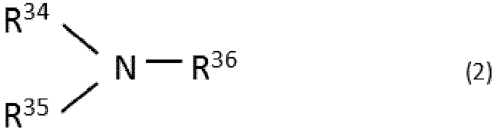 wherein
R³¹ is hydrogen or a branched or straight, substituted or unsubstituted hydrocarbon group having 1-30 carbon atoms,
R³² and R³³ are the same or different and selected from branched or straight, substituted or unsubstituted hydrocarbon groups having 1-30 carbon atoms and
R³⁴ is hydrogen or a functional group with at least one active hydrogen
R³⁵ is hydrogen or a branched, straight or cyclic, substituted or unsubstituted hydrocarbon group having 1-30 carbon atoms,
R³⁶ is a branched, straight or cyclic, substituted or unsubstituted hydrocarbon group having 1-30 carbon atoms.

Most preferably, the metallocene catalyst component, the catalyst activator and the modifier are contained by the support. In other words, in the catalyst composition, the metallocene catalyst component, the catalyst activator and the modifier are all present on the support, obviating the need for separate addition of the modifier and of the support containing the metallocene catalyst component and the activator.

The catalyst composition may contain from 0.01 - 5 wt%, preferably from 0.5 - 3 wt%, more preferably from 0.3 - 2 wt% of the modifier, based on the catalyst composition.

In a preferred embodiment the amounts of aluminum compound and amine compound are selected such that in the modifier the molar ratio of Al to N is in the range of 1:3 to 5:1, preferably 1:2 to 3:1, more preferably 1:1.5 to 1.5:1. Within this range a good combination of technical effects can be obtained. If the molar ratio of Al to N is below 1:3 then fouling and/or sheeting may occur, whereas if the molar ratio of Al to N is above 5:1 catalyst productivity decreases, i.e. the amount of polymer produced per gram of catalyst decreases. The most preferred molar ratio is 1:1.

In the compound of general formula (2), R³⁴ is a hydrogen or a functional group with at least one active hydrogen, R³⁵ is hydrogen or a branched, straight or cyclic, substituted or unsubstituted hydrocarbon group having 1-30 carbon atoms, R³⁶ is a branched, straight or cyclic, substituted or unsubstituted hydrocarbon group having 1-30 carbon atoms (carbon atoms of the substituents included). The branched, straight or cyclic, substituted or unsubstituted hydrocarbon group having 1-30 carbon atoms is preferably an alkyl group having 1-30 carbon atoms, for example an alkyl group having 1-30 carbon atoms, for example a straight, branched or cyclic alkyl, an aralkyl group having 1-30 carbon atoms or an alkaryl group having 1-30 carbon atoms.

The amine compound used in the reaction to prepare the modifier may be a single amine compound or a mixture of two or more different amine compounds.

The amine compound used for preparing the modifier of the present invention preferably has a hydrocarbon group of at least eight carbon atoms, more preferably at least twelve carbon atoms, for example an alkyl group of 1 to fifteen carbon atoms. The amine compound may be a primary, secondary or tertiary amine. The amine compound is preferably a primary amine.

Preferably, the amine compound is selected from the group consisting of octadecylamine, ethylhexylamine, cyclohexylamine, bis(4-aminocyclohexyl)methane, hexamethylenediamine, 1,3-benzenedimethanamine, 1-amino-3-aminomethyl-3,5,5-trimethylcyclohexane and 6-amino-1,3-dimethyluracil.

The aluminum compound used in the reaction to prepare the modifier may be a single aluminum compound or a mixture of two or more different aluminum compounds. R₁, R₂ and R₃ may each independently stand for a branched or straight, substituted or unsubstituted hydrocarbon group having 1-30 carbon atoms, for example may each independently stand for an alkyl, preferably R³¹, R³² and R³³ all stand for an alkyl, more preferably R³¹, R³² and R³³ are the same.

The aluminum compound is preferably a trialkylaluminum (R³¹=R³²=R³³= alkyl) or a dialkylaluminumhydride (R³¹ = hydrogen, R³²=R³³ = alkyl).

Preferably, the aluminum compound is selected from the group consisting of of tri-methylaluminum, tri-ethylaluminum, tri-propylaluminum, tri-butylaluminum, tri-isopropylaluminum tri-isobutylaluminum, or di-methylaluminumhydride , di-ethylaluminumhydride, di-propylaluminumhydride, di-butylaluminumhydride, di-isopropylaluminumhydride, di-isobutylaluminumhydride. These materials are readily available and have good reactivity with amines.

An alkyl as used herein will be understood by the skilled person as meaning a hydrocarbon group that contains only carbon and hydrogen atoms and is derived from alkanes such as methane, ethane, propane, butane, pentane, hexane etc. The alkyl may be branched, straight or cyclic. Preferably, R³¹, R³² and R³³ may each independently stand for a straight or branched alkyl.

In a preferred embodiment the aluminum compound is a trialkylaluminum and the amine compound is a primary amine, preferably the aluminium compound is selected from the group consisting of octadecylamine, ethylhexylamine, cyclohexylamine, bis(4-aminocyclohexyl)methane, hexamethylenediamine, 1,3-benzenedimethanamine, 1-amino-3-aminomethyl-3,5,5-trimethylcyclohexane and 6-amino-1,3-dimethyluracil.

In a special embodiment, the invention relates to a catalyst composition for the polymerization of olefins comprising a support containing a metallocene catalyst, preferably biphenyl(2-indenyl)₂ZrCl₂, (methyl)aluminoxane or modified methylaluminoxane and a modifier, wherein the modifier is the product of reacting octadecylamine, 2-ethylhexylamine or cyclohexylamine with triisobutylaluminum.

Preferably, the metallocene catalyst comprises a support containing a metallocene catalyst, a catalyst activator, preferably an aluminoxane and a modifier wherein the modifier is the product of reacting an aluminum compound of general formula (1) 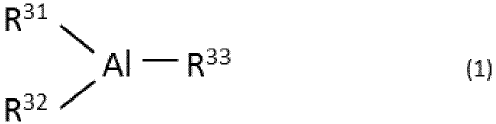 with an amine compound of general formula (2) 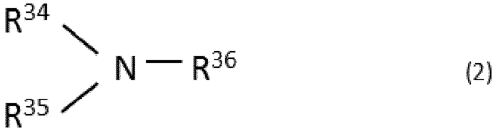 wherein
wherein R³¹, R³², R³³, R³⁴, R³⁵ and R³⁶ are as defined hereabove,
wherein the metallocene catalyst is prepared by a method comprising the steps of
a) preparing the modifier by reacting the aluminium compound of general formula (1) 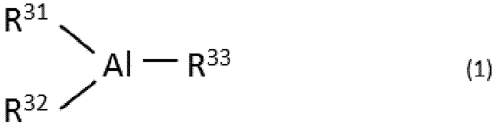 with the amine compound of general formula (2) 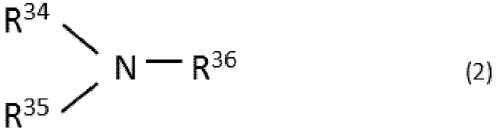 wherein R³¹, R³², R³³, R³⁴, R³⁵ and R³⁶ are as defined hereabove,b) activating the metallocene catalyst component by adding the catalyst activator to said metallocene catalyst component to obtain an activated metallocene catalyst component
c) combining in a solvent a support material, the activated single site catalyst component obtained in step b) and the modifier obtained in step a) and
d) optionally drying the reaction product obtained in step c)
The term "catalyst activator" as used herein is to be understood as any compound which can activate the metallocene catalyst so that it is capable of polymerisation of monomers, in particular olefins. Preferably, the catalyst activator is an alumoxane, a perfluorophenylborane and/or a perfluorophenylborate, preferably alumoxane, more preferably methylaluminoxane and/or modified methylaluminoxane.

The support in the catalyst composition of the present invention can be an organic or inorganic material and is preferably porous. Examples of organic material are cross-linked or functionalized polystyrene, PVC, cross-linked polyethylene. Examples of inorganic material are silica, alumina, silica-alumina, inorganic chlorides such as MgCI2, talc and zeolite. Mixtures of two or more of these supports may be used. The preferred particle size of the support is from 1 to 120 micrometres, preferably of from 20 to 80 micrometres and the preferred average particle size is from 40 to 50 micrometres.

The preferred support is silica. The pore volume of the support is preferably of from 0.5 to 3 cm³/g. The preferred surface area of the support material is in the range of from 50 to 500 m²/g. The silica used in this invention is preferably dehydrated prior to being used to prepare the catalyst composition.
In case of a zirconium catalyst component, the amount of zirconium based on the support may for example be in the range from 0.05 to 3wt%.

The catalyst composition preferably has an aluminum content in the range of 3 - 20 wt%, preferably 7 - 12 wt% based on the catalyst composition.

### Process for producing metallocene catalyst

The metallocene catalyst composition of the present invention may be prepared by a method comprising the steps of
a) preparing a modifier by reacting an aluminum compound of general formula (1) 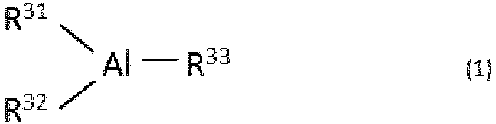 with an amine compound of general formula (2) 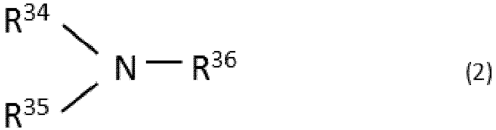 wherein R³¹, R³², R³³, R³⁴, R³⁵ and R³⁶ are as defined hereabove,
b) activating a metallocene catalyst component by adding a catalyst activator to said metallocene catalyst component, preferably in an organic solvent such as toluene or xylene to obtain an activated single site catalyst component
c) combining in a solvent a support material, the activated metallocene catalyst component obtained in step b) and the modifier obtained in step a)
d) optionally drying the reaction product obtained in step c)

In a practical embodiment step c) may be carried out by adding the activated metallocene catalyst, optionally including an organic solvent, to the support. The so obtained mixture may further react for at least thirty minutes, preferably at least one hour at a temperature of between 20°C and 80 °C, preferably between 40°C and 60°C, after which the modifier obtained in step a) is added.

Step a) in the method for preparing the catalyst composition is preferably carried out a temperature of 0°C - 50°C, more preferably at a temperature of 10°C to 35°C.

The catalyst composition obtained after drying is a dry flowing powder with particle size range of 1 to 300 microns, more preferably 5 to 90 microns.

The catalyst composition of the invention is preferably stored under an inert atmosphere, such as nitrogen or argon.

### Process for producing LLDPE B

LLDPE B is obtained by a process for producing a copolymer of ethylene and another α-olefin under reaction conditions effective for forming a LLDPE B. The production of LLDPE B may be carried out in a solution, slurry and gas-phase polymerisation process. More preferably in a slurry or a gas-phase process, in particular in a condensed mode gas phase process.

The production process of LLDPE is summarised in Handbook of Polyethylene by Andrew Peacock (2000; Dekker; ISBN 0824795466) at pages 43-66.

The metallocene catalyst is used for the polymerisation of ethylene to linear low density polyethylene (LLDPE). To that extent ethylene may be copolymerised with small amounts of copolymers, for example alpha-olefins having 3 to 10 carbon atoms. Examples of alpha-olefins are propylene, butylene, hexene and octene. For example ethylene may be copolymerized with octene when polymerisation is carried out in a slurry phase and butene and/or hexene when polymerisation is carried out in the gas phase. Reaction conditions and equipment to be employed for the polymerisation are known to the skilled person.
The copolymerization reaction may be employed to produce LLDPE B. Such ethylene copolymerization reactions include, but are not limited to, gas phase polymerization process, slurry phase polymerization process, liquid phase polymerization process, and combinations thereof using one or more conventional reactors, e.g. fluidized bed gas phase reactors, loop reactors, stirred tank reactors, batch reactors in parallel, series, and/or any combinations thereof. In the alternative, the linear low density polyethylene may be produced in a high pressure reactor. For example, the (linear low density) polyethylene according to the instant invention may be produced via gas phase polymerization process in a single gas phase reactor; however, the instant invention is not so limited, and any of the above polymerization processes may be employed. In one embodiment, the polymerization reactor may comprise of two or more reactors in series, parallel, or combinations thereof. Preferably, the polymerization reactor is one reactor, e.g. a fluidized bed gas phase reactor. In another embodiment, the gas phase polymerization reactor is a continuous polymerization reactor comprising one or more feed streams. In the polymerization reactor, the one or more feed streams are combined together, and the gas comprising ethylene and one or more comonomers, e.g. one or more alpha-olefins, are flowed or cycled continuously through the polymerization reactor by any suitable means. The gas comprising ethylene and optionally one or more comonomers, e.g. alpha-olefins having 3 to 10 carbon atoms, may be fed up through a distributor plate to fluidize the bed in a continuous fluidization process.
In production, the metallocene catalyst, ethylene, alpha-olefins having 3 to 10 carbon atoms, hydrogen, optionally one or more inert gases and/or liquids, e.g. N₂, isopentane, and hexane, and optionally one or more continuity additive, e.g. ethoxylated stearyl amine or aluminum distearate or combinations thereof, are continuously fed into a reactor, e.g. a fluidized bed gas phase reactor. Such fluidized bed gas phase reactor may be in fluid communication with one or more discharge tanks, surge tanks, purge tanks, and/or recycle compressors. The temperature in such reactor may for example be in the range of 70 to 115 °C, preferably 75 to 110 °C, more preferably 75 to 100 °C, and the pressure may be in the range of 15 to 30 atm, preferably 17 to 26 atm. A distributor plate that may be present at the bottom of the polyethylene in the fluidized bed gas phase reactor provides a uniform flow of the upflowing monomer, comonomer, and inert gases stream. A mechanical agitator may also be provided to provide contact between the solid particles and the comonomer gas stream. The fluidized bed, a vertical cylindrical reactor, may have a bulb shape at the top to facilitate the reduction of gas velocity; thus, permitting the granular polyethylene to separate from the upflowing gases. The unreacted gases may then be cooled to remove the heat of polymerization, recompressed, and then recycled to the bottom of the reactor. The residual hydrocarbons may then be removed and the polyethylene produced may be transported under N2 to a purge bin. Also, moisture may be introduced to reduce the presence of any residual catalyzed reactions with O₂ before the polyethylene is exposed to oxygen.
In the fluidized bed reactor, a monomer stream may be passed to a polymerization section. The fluidized bed reactor may include a reaction zone in fluid communication with a velocity reduction zone. The reaction zone includes a bed of growing polyethylene particles, formed polyethylene particles and catalyst composition particles fluidized by the continuous flow of polymerizable and modifying gaseous components in the form of make-up feed and recycle fluid through the reaction zone. Preferably, the make-up feed includes ethylene and optionally one or more alpha-olefins having 3 to 10 carbon atoms, and may also include condensing agents as is known in the art and disclosed in, for example, U.S. Pat. No. 4,543,399, U.S. Pat. No. 5,405,922, and U.S. Pat. No. 5,462,999.

It is preferable that the ethylene is present in the reactor at a partial pressure at or than 160 psia (1100 kPa), or 190 psia (1300 kPa), or 200 psia (1380 kPa), or 210 psia (1450 kPa), or 220 psia (1515 kPa). The comonomer, e.g. one or more alpha-olefins having 3 to 10 carbon atomsis present at any level that will achieve the desired weight percent incorporation of the comonomer into the polyethylene. This may be expressed as a mole ratio of comonomer to ethylene as described herein, which is the ratio of the gas concentration of comonomer moles in the cycle gas to the gas concentration of ethylene moles in the cycle gas. In one embodiment of the LLDPE B production, the comonomer is present with ethylene in the cycle gas in a mole ratio range of from 0 to 0.1 comonomer to 1 mole of ethylene, for example in a mole ratio range of from 0 to 0.05, for example from 0 to 0.04, for example from 0 to 0.03, for example from 0 to 0.02 comonomer to 1 mole of ethylene.

Hydrogen gas may also be added to the polymerization reactor(s). For example, the ratio of hydrogen to total ethylene monomer (ppm H₂ / mol % ethylene) in the circulating gas stream may be in the range from 0 to 60:1, for example from 0.10:1 to 50:1, for example from 0 to 35:1, for example from 0 to 25:1, for example from 7:1 to 22:1.
The optimal amount of metallocene catalyst component to be used in the polymerization can easily be determined by the person skilled in the art through routine experimentation. For example, the amount of catalyst component may be chosen such that the productivity is in the range from 1500 to 10000 gram polyolefin per gram catalyst.

During the polymerisation small amounts of scavenger, such as aluminum alkyl may also be added to the reactor in order to prevent impurities in the reactor from deactivating or poisoning the catalyst. Typical scavengers include triisobutyl aluminum, trihexyl aluminum, triisopropyl aluminum, triethylaluminum and trimethyl aluminum (TMA).

During the polymerisation a continuity aid agent (CAA) may also be added to the reactor. Said continuity aid agent is prepared separately prior to introduction into the reactor by reacting:
- at least one metal alkyl or metal alkyl hydride compound of a metal from group IIA or IIIA of the periodic system of elements, and
- at least one compound of general formula R²¹ₘY⁴R²²_{p'}
   wherein
- R²¹ is a branched, straight, or cyclic, substituted or unsubstituted hydrocarbon
   group having 1 to 50, preferably 10 - 40, carbon atoms,
- R²² is hydrogen or a functional group with at least one active hydrogen, for example an OH group
- Y⁴ is a heteroatom selected from the group of O, N, P or S,
- p and m are each at least 1 and are such that the formula has no net charge,
- the molar ratio of the metal of the metal alkyl compound and Y⁴ is 2:1 to 10:1.

Preferably the continuity aid agent is the same or different as the modifier present in the composition according to the present invention and is the product of reacting an aluminum compound of general formula (1) 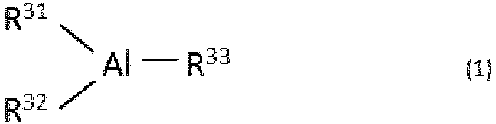 with an amine compound of general formula (2) 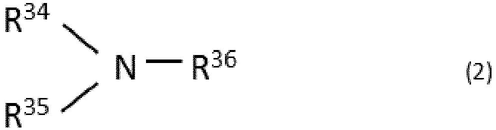 wherein R³¹, R³², R³³, R³⁴, R³⁵ and R³⁶ are as defined hereabove,

The continuity aid agent is added to the reactor as a further process aid for reducing fouling and or sheeting. The amount is generally in the order of 0.01 - 0.1 mmol per gram of catalyst composition.

Optionally, additives may be added to the polyethylene composition according to the present invention. The additives may for example be added during the melt-mixing. Examples of suitable additives include but are not limited to the additives usually used for polyethylene, for example antioxidants, nucleating agents, acid scavengers, processing aids, lubricants, surfactants, blowing agents, ultraviolet light absorbers, quenchers, antistatic agents, slip agents, anti-blocking agents, antifogging agents, pigments, dyes and fillers, and cure agents such as peroxides. The additives may be present in the typically effective amounts well known in the art, such as 0.001 wt% to 10 wt% based on the total composition.

### Process for producing the polyethylene composition

Blending of LLDPE A, LLDPE B and optionally additives can be performed by mixing LLDPE A, LLDPE B and optionally the additives, and by subsequently melt-mixing of the polyethylene composition.

Mixing can be performed at a temperature which is below the melt temperature of the LLDPE polymers. Preferably, the temperature during mixing is at least 5 ºC below the melt temperature of the LLDPE polymers, more preferably at least 10 ºC below the melt temperature of the LLDPE polymers.

The temperature in the mixing zone can, for example, be between 20 and 105 ºC, more preferably between 25 and 100 ºC, most preferably between 50 and 95 ºC.

Mixing can be performed in any way known to the person skilled in the art. Commonly used mixing devices are a tumbler mixer, a high speed mixer, a jet mixer, a planetary mixer or a Banbury mixer; and blenders, for example V blender, ribbon blender or a cone blender. During mixing the polyethylene composition can be preheated. Mixing can also be performed in a part of an extruder. Examples of extruders are mono- and twin-screw extruders.

After mixing the polyethylene composition is melt-mixed by heating the polyethylene composition to a temperature above the melting temperature of the LLDPE polymers.

The melting temperature of the LLDPE polymers is determined by differential scanning calorimetry according to ISO 11357, wherein heating is performed at a heating rate of 10º C/min and the melting temperature is taken from the second heating curve. Melt-mixing preferably is performed at a temperature above 160 ºC, more preferably at a temperature above 170 ºC, most preferably at a temperature above 180 ºC. Melt-mixing preferably is performed at a temperature below 250 ºC, more preferably at a temperature below 230 ºC, most preferably at a temperature below 220 ºC.

Preferably, the blending process is performed in an extruder comprising a mixing zone having a temperature below the melt temperature of the LLDPE polymers and a subsequent reaction zone having a temperature above the melting temperature of the LLDPE polymers.

### Use

The invention also relates to the use of the polyethylene composition according to the invention for the preparation of articles, preferably films, more preferably blown films.

It has been found that the polyethylene compositions according to the invention can suitably be used for the preparation of a film having good optical properties, for example a low haze and/or a high gloss.The polyethylene compositions according to the invention may be manufactured into a film, for example by compounding, extrusion, film blowing or casting and all methods of film formation to achieve, for example uniaxial or biaxial orientation. Examples of films include blown or cast films formed by coextrusion (to form multilayer films) or by lamination and may be useful as films for packaging, for example as shrink film, cling film, stretch film, sealing films, oriented films, snack packaging, heavy duty bags, grocery sacks, baked and frozen food packaging, medical packaging, industrial liners, membranes, etc. in food-contact and non-food contact applications, agricultural films and sheets.

### Article

The invention also relates to an article comprising the polyethylene compositions according to the invention. The polyethylene composition according to the present invention may for example be used in blown film extrusion, cast film extrusion, injection moulding and rotational moulding for producing articles such as, for example, shopping bags, shipping sacks, manual stretch wrap film, food wrap (cling film), ice bags, frozen food bags, pallet stretch wrap film, greenhouse film, lamination, screw closures, bottle caps, food containers, crates, trays, pails, shipping containers, industrial tanks, agricultural tanks, chemical shipping drums, carpet packing, trash containers and toys.

Although the invention has been described in detail for purposes of illustration, it is understood that such detail is solely for that purpose and variations can be made therein by those skilled in the art without departing from the spirit and scope of the invention as defined in the claims.

It is further noted that the invention relates to all possible combinations of features described herein, preferred in particular are those combinations of features that are present in the claims.

It is further noted that the term 'comprising' does not exclude the presence of other elements. However, it is also to be understood that a description on a product comprising certain components also discloses a product consisting of these components. Similarly, it is also to be understood that a description on a process comprising certain steps also discloses a process consisting of these steps.

The invention will hereafter be elucidated by way of the following examples, without being limited thereto.

### Examples

The polyethylene compositons 1-5 were prepared by mixing AZ LLDPE and metallocene LLDPE followed by extrusion of the mixture. Composition 1 is a composition consisting of 100% AZ LLDPE and composition 5 is a composition consisting of 100% metallocene LLDPE. The other compositions are polyethylene compositions with different amounts of AZ LLDPE and metallocene LLDPE.

### Mixing

For each composition 2 kg of pilot plant reactor base resin in granular form was used mixed with additives, as shown in table 1. The additives mixing was carried out in a small Henschel mixer (3 kg capacity) at slow speed for 3 minutes.

### Compounding

Compounding was carried out in an extruder;Thermo Fischer / twin T - Fischer PTW24.

The extrusion conditions are shown in Table 1. The melt pressure and the torque were determined during extrusion.

The compounding conditions were kept similar for all 5 different compositions.

**Table 1**

| Composition 1 | | | | | | | | | | | |
|---|---|---|---|---|---|---|---|---|---|---|---|
| 100% AZ - C6-LLDPE. Irganox 1076 = 200 ppm, Irgafos 168 = 800 ppm. ZnSt = 500 ppm | | | | | | | | | | | |
| TS1 °C | TS2 °C | TS3 °C | T84 °C | TS5 °C | TS6 °C | TS7 °C | TS8 | TS9 °C | TS10°C | Melt pressure (bar) | Torque (Nm) |
| 107.2 | 179.9 | 180.0 | 185.0 | 189.9 | 190.0 | 195.0 | 194.6 | 199.8 | 178.5 | 10.1 | 100.0 |

| Composition 2 | | | | | | | | | | | |
|---|---|---|---|---|---|---|---|---|---|---|---|
| 75% AZ -C6 LLDPE + 25% C6 mLLDPE Irganox 1076 = 500 ppm. Irgafos = 2000 ppm | | | | | | | | | | | |
| TS1 °C | TS2 °C | TS3 °C | TS4 °C | TS5 °C | TS6 °C | TS7 °C | T88 °C | TS9 °C | TS10 °C | Melt pressure (bar) | Torque (Nm) |
| 105.2 | 180.0 | 185.0 | 190.0 | 190.0 | 194.9 | 195.0 | 194.8 | 200.1 | 177.1 | 15.0 | 103.7 |

| Composition 3 | | | | | | | | | | | |
|---|---|---|---|---|---|---|---|---|---|---|---|
| 50% AZ -C6 LLDPE + 50% C6 mLLDPE Irganox 1076 = 500 ppm Irgafos = 2000 ppm. | | | | | | | | | | | |
| TS1 °C | TS2 °C | TS3 °C | TS4 °C | TS5 °C | TS6 °C | TS7 °C | TS8 °C | TS9 °C | TS10 °C | Melt pressure (bar) | Torque (Nm) |
| 105.5 | 179.9 | 185.0 | 189.8 | 190.1 | 194.9 | 195.0 | 195.1 | 199.2 | 175.6 | 18.1 | 108.6 |

| Composition 4 | | | | | | | | | | | |
|---|---|---|---|---|---|---|---|---|---|---|---|
| 25% AZ -C6 LLDPE + 75% C6 mLLDPE Irganox 1076 = 500 ppm. Irgafos = 2000 ppm. | | | | | | | | | | | |
| TS1 °C | TS2 °C | TS3 °C | TS4 °C | TS5 °C | TS6 °C | TS7 °C | TS8 °C | TS9 °C | TS10 | Melt pressure (bar) | Torque (Nm) |
| 104.3 | 179.9 | 185.1 | 189.8 | 190.0 | 195.0 | 194.0 | 194.8 | 200.5 | 173.1 | 24.6 | 125.2 |

| Composition 5 | | | | | | | | | | | |
|---|---|---|---|---|---|---|---|---|---|---|---|
| 100% C6 mLLDPE. Irganox 1076 = 500 ppm. Irganox 1076 = 500 ppm. Irgafos = 2000 ppm. PPA Dynamar 5920A = 800 ppm | | | | | | | | | | | |
| TS1 °C | TS2 °C | TS3 °C | TS4 °C | TS5 °C | TS6 °C | TS7 °C | TS8 °C | TS9 °C | TS10 °C | Melt pressure (bar) | Torque (Nm) |
| 106.0 | 179.9 | 185.0 | 189.9 | 190.0 | 194.8 | 194.2 | 194.2 | 200.1 | 178.6 | 27.7 | 127.7 |

In Table 1 it shown that the melt pressure was trending up going from 100 wt.% AZ LLDPE to 100 wt.% mLLDPE. 100 wt.% AZ LLDPE yielded 10.1 bar whereas 100 wt.% mLLDPE yielded 27.7 bar.

In Table 1 it is also shown that also the torque was trending up going from 100 wt.% AZ LLDPE to 100 wt.% mLLDPE. 100 wt.% AZ LLDPE yielded 100 Nm whereas 100 wt.% mLLDPE yielded 127.7 Nm.

100 wt.% AZ LLDPE was the polyethylene composition that was the easiest to process whereas, 100 wt.% mLLDPE was the most difficult to process.

Table 1 shows that the polyethylene compositions comprising 25 wt.% mLLDPE and 50 wt.% mLLDPE have a surprisingly low melt pressure and low torque.

### Properties

The properties of the polyethylene compositions 1, 2, 3, 4 and 5 are shown in Table 2 and Table 3.

The melt index (MI) was determined according to ASTM D1238-13 with a load of 2.16 kg at a temperature of 190°C.

The high load melt index (HMLI) was determined according to ASTM D1238-13 with a load of 21.6 kg at a temperature of 190°C.

The melt flow ratio (MFR) was determined according to ASTM D1238-13 at a temperature of 190°C as the ratio of HMLI/MI.

The density was determined according to ASTM D 792-13.

The zero shear viscosity η⁰ was determined according to ASTM D 4440-08 using an advanced rheological expansion system (ARES).

The complex viscosity η* was determined according to ASTM D 4440-08 using an advanced rheological expansion system (ARES).

The storage modulus G' was determined according to ASTM D 4440-08 using an advanced rheological expansion system (ARES).

The cole-cole graph was made according to ASTM D 4440-08 using an advanced rheological expansion system (ARES).

The crystalline melting temperature was determined with differential scanning calorimetry (DSC) according to ASTM D 3418-08.

The crystallization temperature was determined with differential scanning calorimetry (DSC) according to ASTM D 3418-08.

The crystallinity was determined with differential scanning calorimetry (DSC) according to ASTM D 3418-08. DSC heating/cooling rate is 10°C/minute.

The crystalline melting temperature was determined in the second heating curve whereas, the % crystallinity was determined after the first heating and during the cooling process.

The weight average molecular weight distribution (MWD) was determined with gel permeation chromatography (GPC) according to ASTM D 6474-99. Polystyrene was used for the standardization of the GPC.

The Mz+1 value was determined with gel permeation chromatography (GPC) according to ASTM D 6474-99.

The die swell was determined with a capillary rheometer according to ASTM D 3835-08.

The color of the pellets of compositions 1-5 was determined with a Hunter ColorFlex according to ASTM D 6290-13. The results are given in Table 3.

**Table 2. Results**

| Polyethylene composition | | 1 | 2 | 3 | 4 | 5 |
|---|---|---|---|---|---|---|
| MI | g/10 min | 0.966 | 0.993 | 0.993 | 1.023 | 1.15 |
| HLMI | g/10 min | 27.66 | 25.46 | 22.76 | 21.8 | 21.86 |
| MFR | | 28.62 | 25.63 | 22.92 | 21.307 | 19.065 |
| Density | kg/m³ | 920.4 | 921.2 | 921.1 | 921.3 | 921.9 |
| ARES Zero shear viscosity η0 | Pas | 1.6x10⁴ | 1.38x10⁴ | 9003 | 7933 | 6689 |
| DSC Crystalline melting temperature | °C | 124.6 | 123.90 | 123.24 | 122.63 | 122.71 |
| DSC Crystallization temperature | °C | 112.5 | 111.2 | 111.17 | 110.26 | 109.64 |
| DSC Crystallinity | % | 43.2 | 44.88 | 42.93 | 40.93 | 40.5 |
| GPC MWD | | 4.64 | 4.26 | 3.93 | 3.41 | 3.03 |
| GPC Mz+1 | g/mol | 1040205 | 987631 | 897788 | 622014 | 443061 |

**Table 3, Hunter - ColorFlex - color L, a & b**

| Composition | L | a | B |
|---|---|---|---|
| 1 | 78.693 | -0.910 | -0.460 |
| 2 | 79.743 | -1.000 | -0.553 |
| 3 | 78.503 | -0.707 | -0.753 |
| 4 | 77.580 | -0.670 | -0.533 |
| 5 | 76.077 | -1.093 | - |

The melt index (MI) of all the polyethylene compositions was similar, with a slight trending down when going from a 100 wt.% mLLDPE to a 100 wt.% AZ LLDPE.

The MWD was trending down going from 100 wt.% AZ LLDPE to 100 wt.% mLLDPE. The MWD was 4.64 for 100 wt.% AZ LLDPE and 3.03 for 100 wt.% mLLDPE. The broader the MWD, the easier the processability of the polyethylene composition and the narrower the MWD the most difficult to process. The broader the MWD the better the bubble stability and the narrower the MWD the poorer the bubble stability. For blown film extrusion, the better bubble stability is desired for higher throughput and a wider Blow UP Ratio (BUR).

The Mz+1 was trending down going from 100 wt.% AZ LLDPE to 100 wt.% mLLDPE.

The mechanical properties will trend down as we go from 100% mLLDPE to 100% AZ LLDPE.

The crystalline melt temperature was trending down going from 100 wt.% AZ LLDPE to 100 wt.% mLLDPE. 100 wt.% AZ LLDPE yielded 124.6 °C and 100 wt.% mLLDPE yielded 122.71 °C. The crystallinity temperature was trending down going from 100 wt.% AZ LLDPE to 100 wt.% mLLDPE. 100 wt.% AZ LLDPE yielded 112.5 and 100 wt.% mLLDPE yielded 109.64 °C. AZ LLDPE coo Is faster than mLLDPE.

The % crystallinity was trending down going from 100 wt.% AZ LLDPE to 100 wt.% mLLDPE. There is an optimum of 44.88 % crystallinity at 75 wt% AZ LLDPE. This difference in % crystallinity is the reason behind the difference in the crystalline melt and crystallinity temperatures between 100 wt.% AZ LLDPE and 100 wt.% mLLDPE and the other polyethylene compositions.

The zero shear viscosity was trending down going from 100 wt.% AZ LLDPE to 100 wt.% mLLDPE. The difference between 100 wt.% AZ LLDPE and 100 wt.% mLLDPE was significant as shown in Table 2.

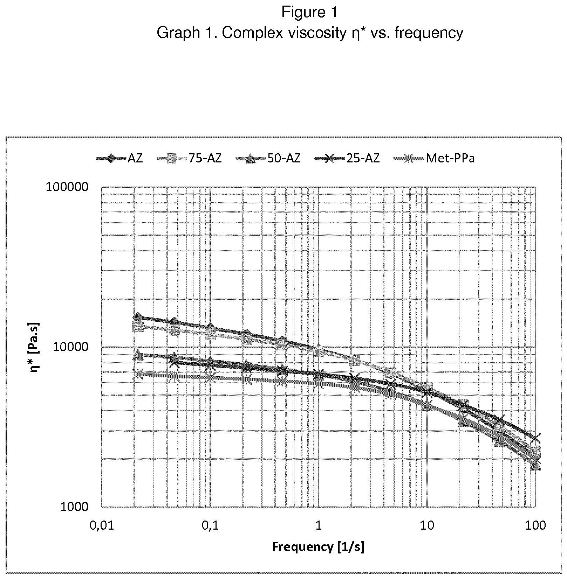

The complex viscosity η* versus frequency, as shown in figure 1, showed that 100 wt.% AZ LLDPE was more viscous than 100 wt.% mLLDPE, at lower frequency but, 100 wt.% AZ LLDPE was more shear thinning than 100 wt.% mLLDPE. 100 wt.% mLLDPE exhibited a more Newtonian flow than 100 wt.% AZ LLDPE.

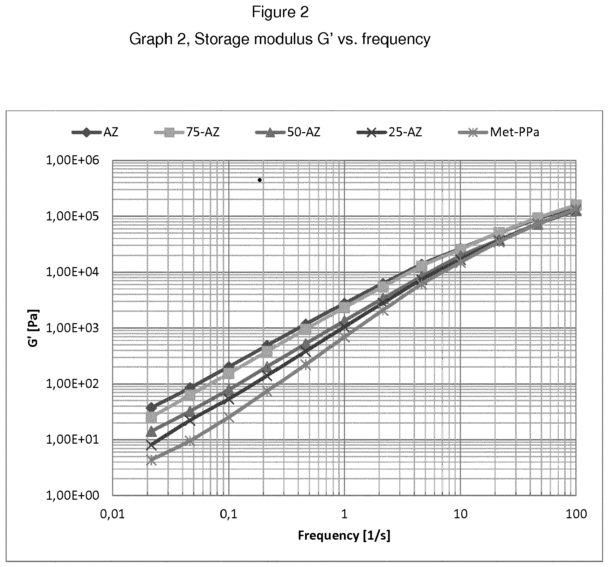

The storage modulus G' at lower frequency of 100 wt.% AZ LLDPE was higher than 100 wt.% mLLDPE i.e. 100 wt.% AZ LLDPE was behaving more elastically than 100 wt.% mLLDPE. At higher frequency, all the lines for the different polyethylene compositions were coincided, as shown in figure 2.

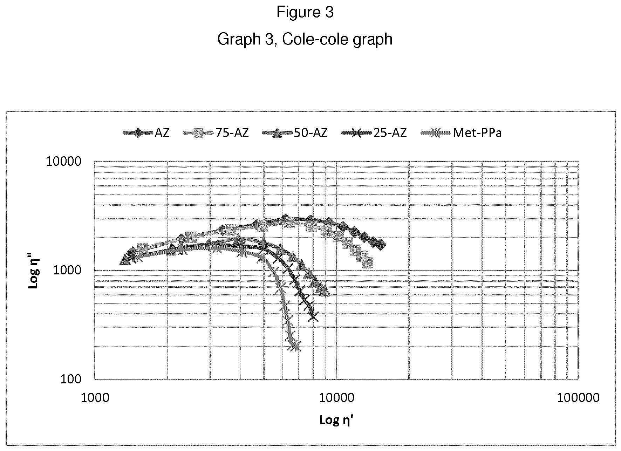

The cole-cole graph, as illustrated in figure 3, show that both AZ LLDPE and mLLDPE were miscible and will form a homogeneous blend for the polyethylene compositions that were tested. It turns out that the mixture having 75% AZ LLDPE and 25% mLLDPE shows almost the same cole-cole graph as the 100% AZ LLDPE.

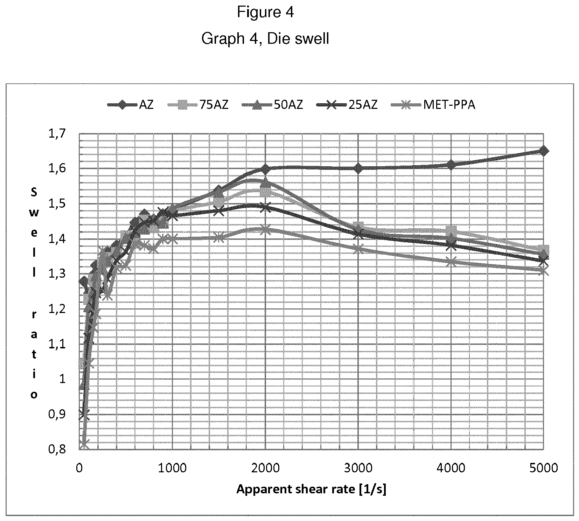

The die swell graph, as illustrated in figure 4, shows that the 100 wt.% AZ LLDPE exhibited a higher die swell than 100 wt.% mLLDPE. All other polyethylene compositions 2 to 4 showed values surprisingly close to the 100 wt% mLLDPE values.
Comparison of all graphs shows that the addition of a small amount of mLLDPE to AZ LLDPE improves the dies well to the preferred level of the mLLDPE, but also keeps a number of preferred properties of the AZ LLDPE, especially at lower amounts of added mLLDPE.

## Claims

1. Polyethylene composition comprising 45-88 wt% of a LLDPE A and 55-12 wt% of a LLDPE B, wherein
i) LLDPE A is obtainable by a process for producing a copolymer of ethylene and another α-olefin in the presence of an Advanced Ziegler-Natta catalyst, wherein the Ziegler-Natta catalyst is produced in a process comprising the steps of:
(a) contacting a dehydrated support having hydroxyl groups with a magnesium compound having the general formula MgR'R", wherein R' and R" are the same or different and are independently selected from the group comprising an alkyl group, alkenyl group, alkadienyl group, aryl group, alkaryl group, alkenylaryl group and alkadienylaryl group;
(b) contacting the product obtained in step (a) with modifying compounds(A), (B) and (C), wherein:compound (A) is at least one compound selected from the group consisting of carboxylic acid, carboxylic acid ester, ketone, acyl halide, aldehyde and alcohol;
compound (B) is a compound having the general formula R¹ₐ(R²O)_{b}SiY¹_{c}, wherein a, b and c are each integers from 0 to 4 and the sum of a, b and c is equal to 4 with a proviso that when c is equal to 4 then modifying compound (A) is not an alcohol, Si is a silicon atom, O is an oxygen atom, Y¹ is a halide atom and R¹ and R² are the same or different and are independently selected from the group comprising an alkyl group, alkenyl group, alkadienyl group, aryl group, alkaryl group, alkenylaryl group and alkadienylaryl group;
compound (C) is a compound having the general formula (R¹¹O)₄M¹ wherein M¹ is a titanium atom, a zirconium atom or a vanadium atom, O is an oxygen atom and R¹¹ is selected from the group comprising an alkyl group, alkenyl group, alkadienyl group, aryl group, alkaryl group, alkenylaryl group and alkadienylaryl group; and
(c) contacting the product obtained in step (b) with a titanium halide compound having the general formula TiY₄, wherein Ti is a titanium atom and Y is a halide atom,
ii) LLDPE B is obtainable by a process for producing a copolymer of ethylene and another α-olefin in the presence of a metallocene catalyst,
wherein the metallocene catalyst comprises a metallocene component of the formula I 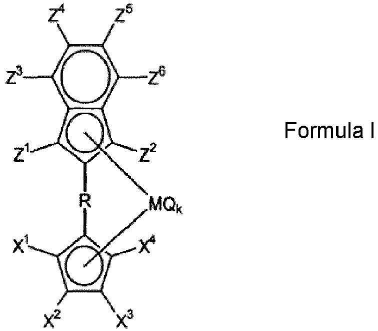 wherein
M is a transition metal selected from the group consisting of lanthanides and metals from group 3, 4, 5 or 6 of the Periodic System of Elements;
Q is an anionic ligand to M;
k represents the number of anionic ligands Q and equals the valence of M minus two divided by the valence of the anionic Q ligand;
R is a hydrocarbon bridging group; and
Z and X are substituents.

2. Polyethylene composition according to claim 1, wherein the metallocene catalyst comprises a supported metallocene catalyst component, a catalyst activator and a modifier.

3. Polyethylene composition according to anyone of claims 1-2, wherein the support for the Ziegler-Natta catalyst is silica, alumina, magnesia, thoria, zirconia or mixtures thereof.

4. Polyethylene composition according to anyone of claims 1-3, wherein compound (A) is selected from methyl n-propyl ketone, ethyl acetate, n-butyl acetate, acetic acid, isobutyric acid, isobutyraldehyde, ethanoyl chloride, ethanol or sec-butanol.

5. Polyethylene composition according to any one of claims 1-4, wherein compound (B) is selected from tetraethoxysilane, n-propyltriethoxysilane, isobutyltrimethoxysilane, dimethyldichlorosilane, n-butyltrichlorosilane or silicon tetrachloride.

6. Polyethylene composition according to any one of claims 1-5, wherein compound compound (C) is selected from titanium tetraethoxide, titanium tetra-n-butoxide or zirconium tetra-n-butoxide.

7. Polyethylene composition according to claim 2, wherein the catalyst activator is an alumoxane, a perfluorophenylborane and/or a perfluorophenylborate.

8. Polyethylene composition according to claim 2, wherein the modifier is the product of reacting an aluminum compound of general formula (1) 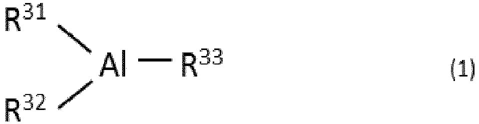 with an amine compound of general formula (2) 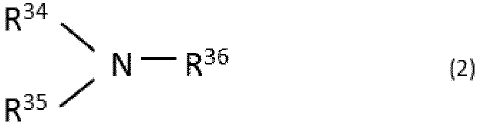 wherein
- R³¹ is hydrogen or a branched or straight, substituted or unsubstituted hydrocarbon group having 1-30 carbon atoms,
- R³² and R³³ are the same or different and selected from branched or straight, substituted or unsubstituted hydrocarbon groups having 1-30 carbon atoms
- R³⁴ is hydrogen or a functional group with at least one active hydrogen
- R³⁵ is hydrogen or a branched, straight or cyclic, substituted or unsubstituted hydrocarbon group having 1-30 carbon atoms, and
- R³⁶ is a branched,straight or cyclic, substituted or unsubstituted hydrocarbon group having 1-30 carbon atoms.

9. Polyethylene composition according to claim 8, wherein the amine compound is selected from the group consisting of octadecylamine, ethylhexylamine, cyclohexylamine, bis(4-aminocyclohexyl)methane, hexamethylenediamine, 1,3-benzenedimethanamine, 1-amino-3-aminomethyl-3,5,5-trimethylcyclohexane and 6-amino-1,3-dimethyluracil.

10. Polyethylene composition according to claim 8 or 9, wherein the aluminum compound is a tri-alkylaluminum compound or a dialkylaluminumhydride.

11. Polyethylene composition according to anyone of claims 1-10, wherein during the process for producing a copolymer of ethylene and another α-olefin in the presence of a metallocene catalyst system a continuity aid agent is added, wherein said continuity aid agent is prepared separately prior to introduction into the process by reacting:
- at least one metal alkyl or metal alkyl hydride compound of a metal from group IIA or IIIA of the Periodic System of the Elements, and
- at least one compound of general formula R²¹ₘY⁴R²²_{p'}
wherein
- R²¹ is a branched, straight, or cyclic, substituted or unsubstituted hydrocarbon group having 1 to 50, preferably 10 - 40, carbon atoms,
- R²² is hydrogen or a functional group with at least one active hydrogen,
- Y⁴ is a heteroatom selected from the group of O, N, P or S,
- p and m are each at least 1 and are such that the formula has no net charge,
- the molar ratio of the metal of the metal alkyl compound and Y⁴ is 2:1 to 10:1.

12. Use of the polyethylene composition according to anyone of claims 1-11 for the preparation of articles, preferably films, more preferably blown films.

13. An article comprising the polyethylene composition according to anyone of claims 1-11.

## Patentansprüche

1. Polyethylenzusammensetzung, umfassend 45-88 Gew.-% eines LLDPE A und 55-12 Gew.-% eines LLDPE B, wobei
i) LLDPE A durch einen Vorgang zum Herstellen eines Copolymers aus Ethylen und einem weiteren α-Olefin in der Gegenwart eines fortschrittlichen Ziegler-Natta-Katalysators erhältlich ist, wobei der Ziegler-Natta-Katalysators in einem Vorgang hergestellt wird, der die Schritte umfasst von:
(a) Inberührungbringen eines dehydrierten Trägers mit Hydroxylgruppen mit einer Magnesiumverbindung mit der allgemeinen Formel MgR'R", wobei R' und R" dasselbe oder unterschiedlich sind und unabhängig aus der Gruppe ausgewählt sind, umfassend eine Alkylgruppe, eine Alkenylgruppe, eine Alkadienylgruppe, eine Arylgruppe, eine Alkarylgruppe, eine Alkenylarylgruppe und eine Alkadienylarylgruppe;
(b) Inberührungbringen des Erzeugnisses, das in Schritt (a) erhalten wird, mit modifizierenden Verbindungen (A), (B) und (C), wobei:
Verbindung (A) wenigstens eine Verbindung ist, ausgewählt aus der Gruppe bestehend aus Carbonsäure, Carbonsäureester, Keton, Acylhalid, Aldehyd und Alkohol;
Verbindung (B) eine Verbindung mit der allgemein Formel R¹ₐ(R²O)_{b}SiY¹_{C1}, wobei a, b und c jeweils ganze Zahlen von 0 bis 4 sind und die Summe von a, b und c 4 entspricht, unter der Voraussetzung, dass, wenn c 4 entspricht, die modifzierende Verbindung (A) kein Alkohol ist, Si ein Siliciumatom ist, O ein Sauerstoffatom ist, Y¹ ein Halidatom ist und R¹ und R² dieselben oder unterschiedlich sind und unabhängig aus der Gruppe ausgewählt sind, umfassend eine Alkylgruppe, eine Alkenylgruppe, eine Alkadienylgruppe, eine Arylgruppe, eine Alkarylgruppe, eine Alkenylarylgruppe und eine Alkadienylarylgruppe;
Verbindung (C) eine Verbindung mit der allgemeinen Formel (R¹¹O)₄M¹ ist, wobei M¹ ein Titanatom, ein Zirkonatom oder ein Vanadiumatom ist, O ein Sauerstoffatom ist und R¹¹ aus der Gruppe ausgewählt ist, umfassend eine Alkylgruppe, eine Alkenylgruppe, eine Alkadienylgruppe, eine Arylgruppe, eine Alkarylgruppe, eine Alkenylarylgruppe und eine Alkadienylarylgruppe ist; und
(c) Inberührungbringen des Erzeugnisses, das in Schritt (b) halten wird, mit einer Titanhalidverbindung mit der allgemeinen Formel TiY₄, wobei Ti ein Titanatom ist und Y ein Halidatom ist,
ii) LLPDE B durch einen Vorgang zum Herstellen eines Copolymers aus Ethylen und einem weiteren α-Olefin in der Gegenwart eines Metallocenkatalysators,
wobei der Metallocenkatalysator eine Metallocenverbindung der Formel I umfasst: 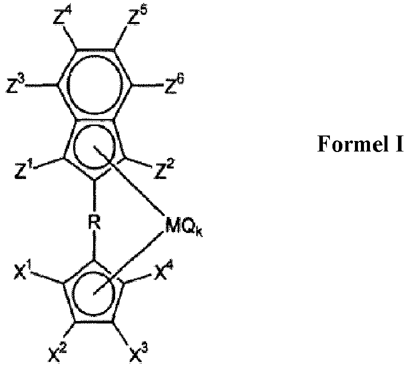 wobei
M ein Übergangsmetall ist, ausgewählt aus der Gruppe bestehend aus Lanthaniden und Metallen der Gruppe 3, 4, 5 oder 6 des Periodensystems der Elemente;
Q ein anionischer Ligand zu M ist;
k die Anzahl anionischer Liganden Q darstellt und der Valenz von M minus zwei geteilt durch die Valenz des anionischen Q-Liganden entspricht;
R eine kohlenwasserstoffbindende Gruppe ist; und
Z und X Substituenten sind.

2. Polyethylenzusammensetzung nach Anspruch 1, wobei der Metallocenkatalysator eine gestützte Metallocenkatalysatorverbindung, einen Katalysatoraktivator und einen Modifizierer umfasst.

3. Polyethylenzusammensetzung nach einem der Ansprüche 1-2, wobei der Träger für den Ziegler-Natta-Katalysator Siliciumdioxid, Aluminiumoxid, Magnesia, Thoriumdioxid, Zirconiumdioxid oder Gemische davon ist.

4. Polyethylenzusammensetzung nach einem der Ansprüche 1-3, wobei Verbindung (A) aus Methyl-n-propylketon, Ethylacetat, n-Butylacetat, Essigsäure, Isobuttersäure, Isobutyraldehyd, Ethanoylchlorid, Ethanol oder Sec-butanol ausgewählt ist.

5. Polyethylenzusammensetzung nach einem der Ansprüche 1-4, wobei Verbindung (B) aus Tetraethoxysilan, n-Propyltriethoxysilan, Isobutyltrimethoxysilan, Dimethyldichlorsilan, n-Butyltrichlorsilan oder Siliciumtetrachlorid ausgewählt ist.

6. Polyethylenzusammensetzung nach einem der Ansprüche 1-5, wobei Verbindung (C) aus Titantetraethoxid, Titantetra-n-butoxid oder Zirconiumtetra-n-butoxid ausgewählt ist.

7. Polyethylenzusammensetzung nach Anspruch 2, wobei der Katalysatoraktivator ein Alumoxan, ein Perfluorphenylboran und/oder ein Perfluorphenylborat ist.

8. Polyethylenzusammensetzung nach Anspruch 2, wobei der Modifizierer das Erzeugnis eines Umsetzens einer Aluminiumverbindung der allgemeinen Formel (1) 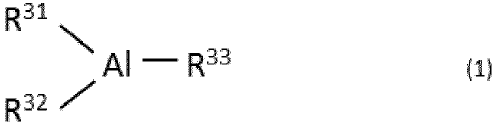 mit einer Aminverbindung der allgemeinen Formel (2) 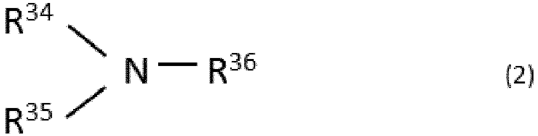 ist wobei
- R³¹ Wasserstoff oder eine verzweigte oder gerade, substituierte oder nicht substituierte Kohlenwasserstoffgruppe mit 1-30 Kohlenstoffatomen ist,
- R³² und R³³ dieselben oder unterschiedlich sind und aus verzweigten oder geraden, substituierten oder nicht substituierten Kohlenwasserstoffgruppen mit 1-30 Kohlenstoffatomen ausgewählt sind
- R³⁴ Wasserstoff oder eine funktionelle Gruppe mit wenigstens einem aktiven Wasserstoff ist
- R³⁵ Wasserstoff oder eine verzweigte, gerade oder cyclische, substituierte oder nicht substituierte Kohlenwasserstoffgruppe mit 1-30 Kohlenstoffatomen ist und
- R³⁶ eine verzweigte, gerade oder cyclische, substituierte oder nicht substituierte Kohlenwasserstoffgruppe mit 1-30 Kohlenstoffatomen ist.

9. Polyethylenzusammensetzung nach Anspruch 8, wobei die Aminverbindung aus der Gruppe ausgewählt ist, bestehend Octadecylamin, Ethylhexylamin, Cyclohexylamin, Bis(4-aminocyclohexyl)methan, Hexamethylendiamin, 1,3-Benzoldimethanamin, 1-Amino-3-aminomethyl-3,5,5-trimethylcyclohexan und 6-Amino-1,3-dimethyluracil.

10. Polyethylenzusammensetzung nach Anspruch 8 oder 9, wobei die Aluminiumverbindung eine tri-Alkylaluminiumverbindung oder ein Dialkylaluminiumhydrid ist.

11. Polyethylenzusammensetzung nach einem der Ansprüche 1-10, wobei während des Vorgangs zum Herstellen eines Copolymers aus Ethylen und einem weiteren α-Olefin in der Gegenwart eines Metallocenkatalysatorsystems ein Kontinuitätshilfsmittel hinzugefügt wird, wobei das Kontinuitätshilfsmittel vor der Einführung in den Vorgang separat hergestellt wird durch das Umsetzen von:
- wenigstens einer Metallalkyl- oder Metallalkylhydridverbindung eines Metalls der Gruppe IIA oder IIIA des Periodensystems der Elemente und
- wenigstens eine Verbindung der allgemeinen Formel R²¹ₘY⁴R²²_{p'}
wobei
- R²¹ eine verzweigte, gerade oder cyclische, substituierte oder nicht substituierte Kohlenwasserstoffgruppe mit 1 bis 50, vorzugsweise 10-40 Kohlenstoffatomen ist,
- R²² ein Wasserstoff oder eine funktionelle Gruppe mit wenigstens einem aktiven Wasserstoff ist,
- Y⁴ ein Heteroatom ist, ausgewählt aus der Gruppe von O, N, P oder S,
- p und m jeweils wenigstens 1 sind und derart sind, dass die Formel keine Gesamtladung aufweist,
- das Molarverhältnis des Metalls der Metallalkylverbindung und Y⁴ 2:1 bis 10:1 ist.

12. Verwendung der Polyethylenzusammensetzung nach einem der Ansprüche 1-11 für die Herstellung von Gegenständen, vorzugweise von Folien, bevorzugter von Schlauchfolien.

13. Gegenstand, umfassend die Polyethylenzusammensetzung nach einem der Ansprüche 1-11.

## Revendications

1. Composition de polyéthylène comprenant de 45 à 88 % en poids d'un LLDPE A et de 55 à 12 % en poids d'un LLDPE B, dans laquelle
i) LLDPE A peut être obtenu par un procédé pour produire un copolymère d'éthylène et d'une autre α-oléfine en présence d'un catalyseur Ziegler-Natta avancé, dans laquelle le catalyseur Ziegler-Natta est produit dans un procédé comprenant les étapes de :
(a) la mise en contact d'un support déshydraté ayant des groupes hydroxyle avec un composé magnésium ayant la formule générale MgR'R", dans laquelle R' et R" sont les mêmes ou différents et sont indépendamment sélectionnés parmi le groupe comprenant un groupe alkyle, un groupe alcényle, un groupe alkadiényle, un groupe aryle, un groupe alkaryle, un groupe alcénylaryle et un groupe alkadiénylaryle ;
(b) la mise en contact du produit obtenu dans l'étape (a) avec des composés modificateurs (A), (B) et (C), dans laquelle :
composé (A) est au moins un composé sélectionné parmi le groupe constitué de : acide carboxylique, ester d'acide carboxylique, cétone, halogénure d'acyle, aldéhyde et alcool ;
composé (B) est un composé ayant la formule générale R¹ₐ(R²O)_{b}SiY¹_{c}, dans laquelle a, b et c sont chacun des nombres entiers relatifs de 0 à 4 et la somme de a, de b et de c est égale à 4 à condition que, lorsque c est égal à 4, alors le composé modificateur (A) ne soit pas un alcool, Si est un atome de silicium, O est un atome d'oxygène, Y¹ est un atome d'halogénure et R¹ et R² sont les mêmes ou différents et sont indépendamment sélectionnés parmi le groupe comprenant un groupe alkyle, groupe alcényle, un groupe alkadiényle, un groupe aryle, un groupe alkaryle, un groupe alcénylaryle et un groupe alkadiénylaryle ;
composé (C) est un composé ayant la formule générale (R¹¹O)₄M¹ dans laquelle M¹ est un atome de titane, un atome de zirconium ou un atome de vanadium, O est un atome d'oxygène et R¹¹ est sélectionné parmi le groupe comprenant un groupe alkyle, un groupe alcényle, un groupe alkadiényle, un groupe aryle, un groupe alkaryle, un groupe alcénylaryle et un groupe alkadiénylaryle ; et
(c) la mise en contact du produit obtenu dans l'étape (b) avec un composé halogénure de titane ayant la formule générale TiY₄, dans laquelle Ti est un atome de titane et Y est un atome d'halogénure,
ii) LLDPE B peut être obtenu par un procédé pour produire un copolymère d'éthylène et d'une autre α-oléfme en présence d'un catalyseur à base de métallocène,
dans laquelle le catalyseur à base de métallocène comprend un composant métallocène de la formule I 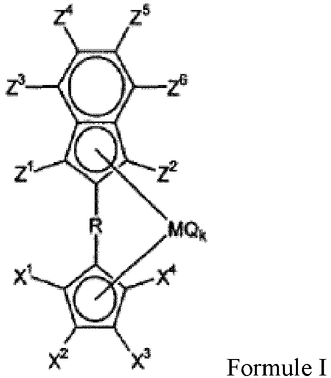 dans laquelle
M est un métal de transition sélectionné parmi le groupe constitué de lanthanides et de métaux de groupe 3, 4, 5 ou 6 du système périodique d'éléments ;
Q est un ligand anionique pour M ;
k représente le nombre de ligands anioniques Q et est égal à la valence de M moins deux divisée par la valence du ligand Q anionique ;
R est un groupe de pontage hydrocarbure ; et
Z et X sont des substituants.

2. Composition de polyéthylène selon la revendication 1, dans laquelle le catalyseur à base de métallocène comprend un composant supporté de catalyseur à base de métallocène, un activateur de catalyseur et un modificateur.

3. Composition de polyéthylène selon l'une quelconque des revendications 1 et 2, dans laquelle le support pour le catalyseur Ziegler-Natta est : silice, alumine, magnésie, thorine, zircone ou des mélanges de ceux-ci.

4. Composition de polyéthylène selon l'une quelconque des revendications 1 à 3, dans laquelle le composé (A) est sélectionné parmi : cétone de n-propyle méthylique, acétate d'éthyle, acétate de n-butyle, acide acétique, acide isobutyrique, isobutyraldéhyde, chlorure d'éthanoyle, éthanol ou sec-butanol.

5. Composition de polyéthylène selon l'une quelconque des revendications 1 à 4, dans laquelle composé (B) est sélectionné parmi : tétraéthoxysilane, n-propyltriéthoxysilane, isobutyltriméthoxysilane, diméthyldichlorosilane, n-butyltrichlorosilane ou tétrachlorure de silicium.

6. Composition de polyéthylène selon l'une quelconque des revendications 1 à 5, dans laquelle le composé (C) est sélectionné parmi : tétraéthoxyde de titane, tétra-n-butoxyde de titane ou tétra-n-butoxyde de zirconium.

7. Composition de polyéthylène selon la revendication 2, dans laquelle l'activateur de catalyseur est un alumoxane, un perfluorophénylborane et/ou un perfluorophénylborate.

8. Composition de polyéthylène selon la revendication 2, dans laquelle le modificateur est le produit de la réaction d'un composé aluminium de la formule générale (1) 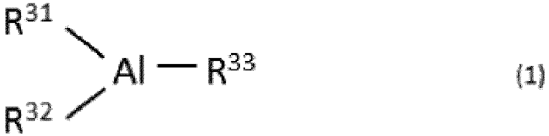 avec un composé amine de la formule générale (2) 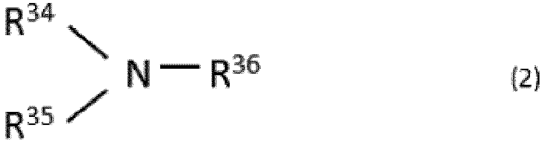 dans laquelle
- R³¹ est hydrogène ou un groupe hydrocarbure substitué ou non substitué, ramifié ou droit ayant d' 1 à 30 atomes de carbone,
- R³² et R³³ sont les mêmes ou différents et sélectionnés parmi des groupes hydrocarbure substitués ou non substitués, ramifiés ou droits ayant d' 1 à 30 atomes de carbone,
- R³⁴ est hydrogène ou un groupe fonctionnel avec au moins un hydrogène actif,
- R³⁵ est hydrogène ou un groupe hydrocarbure substitué ou non substitué, ramifié, droit ou cyclique ayant d' 1 à 30 atomes de carbone, et
- R³⁶ est un groupe hydrocarbure substitué ou non substitué, ramifié, droit ou cyclique ayant d' 1 à 30 atomes de carbone.

9. Composition de polyéthylène selon la revendication 8, dans laquelle le composé amine est sélectionné parmi le groupe constitué de : octadécylamine, éthylhexylamine, cyclohexylamine, bis(4-aminocyclohexyl)méthane, hexaméthylènediamine, 1,3-benzènediméthanamine, 1-amino-3-aminométhyl-3,5,5-triméthylcyclohexane et 6-amino-1,3-diméthyluracile.

10. Composition de polyéthylène selon la revendication 8 ou 9, dans laquelle le composé aluminium est un composé tri-alkylaluminium ou un hydrure de dialkylaluminium.

11. Composition de polyéthylène selon l'une quelconque des revendications 1 à 10, dans laquelle, durant le procédé pour produire un copolymère d'éthylène et d'une autre α-oléfine en présence d'un système de catalyseur à base de métallocène, un agent d'aide à la continuité est ajouté, dans laquelle l'agent d'aide à la continuité est préparé séparément avant l'introduction dans le procédé en faisant réagir :
- au moins un composé alkyle métallique ou hydrure d'alkyle métallique d'un métal du groupe IIA ou IIIA du système périodique des éléments, et
- au moins un composé de la formule générale R21mY⁴R²²ₚ,
dans laquelle
- R²¹ est un groupe hydrocarbure substitué ou non substitué, ramifié, droit, ou cyclique, ayant d' 1 à 50, de préférence de 10 à 40, atomes de carbone,
- R²² est hydrogène ou un groupe fonctionnel avec au moins un hydrogène actif,
- Y⁴ est un hétéroatome sélectionné parmi le groupe de : O, N, P ou S,
- p et m sont chacun au moins 1 et sont tels que la formule n'ait aucune charge nette,
- le rapport molaire du métal du composé alkyle métallique et d'Y⁴ est de 2:1 à 10:1.

12. Utilisation de la composition de polyéthylène selon l'une quelconque des revendications 1 à 11 pour la préparation d'articles, de préférence de films, de façon davantage préférée de films soufflés.

13. Article, comprenant la composition de polyéthylène selon l'une quelconque des revendications 1 à 11.
